(19) Europäisches Patentamt
European Patent Office
Office européen des brevets

(11) **EP 1 882 547 B1**

(12) **FASCICULE DE BREVET EUROPEEN**

(45) Date de publication et mention de la délivrance du brevet:
**28.04.2010 Bulletin 2010/17**

(51) Int Cl.:
***B23Q 17/09*** *(2006.01)* ***B23B 49/00*** *(2006.01)*

(21) Numéro de dépôt: **07290944.3**

(22) Date de dépôt: **26.07.2007**

(54) **Procédé de détection et de quantification d'anomalies de perçage**

Verfahren zur Erkennung und Quantifizierung von Anomalien bei einer Bohrung

Method for the detection and quantification of drilling anomalies

(84) Etats contractants désignés:
**DE ES FR GB IT SE**

(30) Priorité: **28.07.2006 FR 0653162**

(43) Date de publication de la demande:
**30.01.2008 Bulletin 2008/05**

(73) Titulaires:
- **SNECMA**
  **75015 Paris (FR)**
- **ARMINES**
  **75272 Paris Cedex 06 (FR)**

(72) Inventeurs:
- **Turrini, Claude Roger Robert**
  **91610 Ballancourt (FR)**

- **Zerrouki, Véronique Jeannine Suzanne**
  **77176 Savigny-le-Temple (FR)**
- **Colin, Christophe**
  **91000 Evry (FR)**
- **Perrin, Géraldine Laure**
  **75010 Paris (FR)**

(74) Mandataire: **Bloch, Gérard et al**
**Bloch & Bonnétat**
**23bis, rue de Turin**
**75008 Paris (FR)**

(56) Documents cités:
**EP-A- 1 083 023    FR-A1- 2 625 123
US-A1- 4 695 957**

**Description**

L'invention concerne le domaine de l'usinage des matériaux métalliques par un outil coupant en rotation autour de son axe ; il vise en particulier le perçage de trous au moyen d'un foret tel qu'en carbure cémenté.

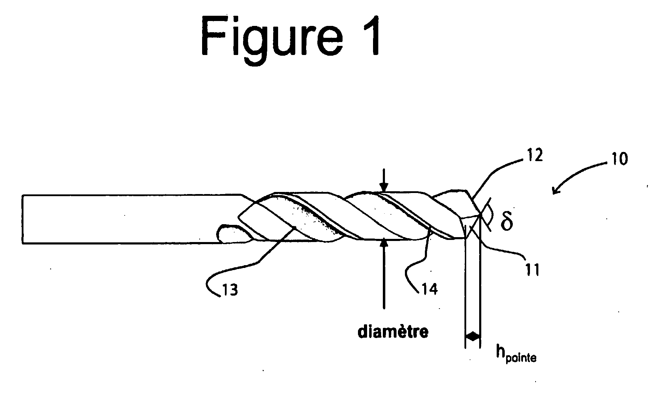

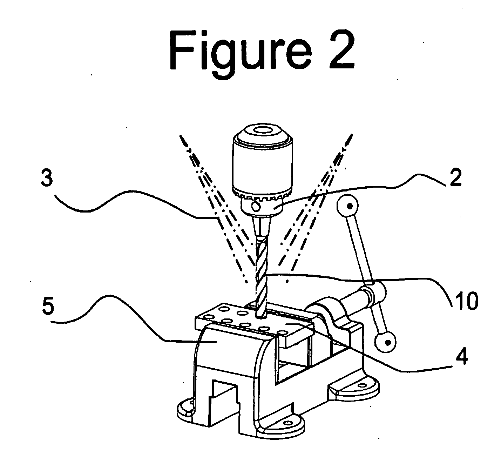

Pour réaliser le perçage de trous dans une pièce, cette dernière est disposée entre les mâchoires d'un étau, lui-même fixé sur une table de mesure d'efforts. Ensuite, un foret au diamètre approprié est approché de la surface de la pièce, et est mis en rotation tout en étant entraîné axialement pour permettre son avance dans le matériau. Le foret 10 dont un exemple est montré sur la figure 1 comprend une tête 11 en forme de pointe tronconique avec une ou plusieurs arêtes de coupe 12, dont l'usure Vb est mesurée en dépouille. Le foret est doté de goujures hélicoïdales 13 servant à l'évacuation des copeaux. Le bord extérieur dès goujures forme le listel 14. Le foret 10 est maintenu dans un porte-outil 2 amovible qui est lui-même monté dans une broche, convenablement guidée. Le dispositif d'entraînement du foret comprend un premier moteur entraînant la broche en rotation autour de son axe et un autre permettant le déplacement axial de la broche. Cela est illustré sur la figure 2. Ce dispositif d'usinage est également doté d'un système de lubrification externe 3 ou interne par le foret. La pièce 4 est elle-même serrée dans un étau 5.

En l'absence d'anomalie, le trou est constitué d'un cylindre de diamètre défini par celui du foret et ses flancs présentent des stries d'usinage régulières, perpendiculaires à l'axe du trou. Cependant, dans certaines conditions de coupe, de géométrie du trou et d'usure d'outil, le trou est susceptible de présenter un certain nombre d'anomalies formées de dépôts de matière provenant d'une mauvaise évacuation des copeaux ou bien d'une modification locale de la structure métallurgique due au couplage d'un effet mécanique et thermique.

On peut définir trois grands types d'anomalies :

Une première anomalie dite de Collage de Copeaux Isolés, que l'on désigne par la suite CCI, peut être observée sur la paroi interne du trou. Il s'agit de copeaux fractionnés, soudés sur la surface du trou et orientés dans la direction perpendiculaire à l'axe du trou.

Une deuxième anomalie dite d'une Bande de Matière Cisaillée, désignée ultérieurement BMC, résulte d'un fort malaxage de copeaux abondants et de matière à la surface du trou pendant la phase de perçage. Cet ensemble de matière est maté à la surface du trou lors de la coupe, puis lissé par les listels lors de la remontée du foret, laissant une multitude de rayures à la surface du trou.

Une troisième anomalie observée est désignée Zone Affectée Thermo-Mécaniquement ou ZATM. Contrairement aux deux anomalies précédentes, l'effet mécanique est couplé à un effet thermique beaucoup plus important, modifiant fortement la microstructure du bord du trou sur une plus grande épaisseur, et sur toute ou partie de la profondeur entre l'entrée et la sortie du trou.

La présente demande de brevet ne se limite pas à ces seules anomalies types, bien d'autres peuvent être concernées. Leur détection et quantification dépendront alors de leur signature PM.

Les origines des anomalies de perçage peuvent être multiples. On a relevé les anomalies suivantes qui ne sont pas exhaustives :

- Lubrification insuffisante en raison d'un arrêt inopiné de la pompe, d'un jet de lubrifiant mal orienté ou d'une mauvaise proportion huile / eau ... ;
- Mauvaise évacuation des copeaux, en particulier pour des trous profonds et/ou obliques pour lesquels le bourrage de matière devient un phénomène fréquent ;
- Paramètres de coupe inadaptés ou mal programmés (en particulier emploi d'une survitesse de coupe au-delà d'une vitesse critique et d'une sous avance) ;
- Outil usé et/ou mal réaffûté ou encore doté d'un revêtement défectueux ;
- Porte-outil mal adapté ;
- Broche mal équilibrée ;
- Outil incorrectement positionné dans le porte-outil ;
- Pièce mal serrée dans l'étau ;
- Mauvais choix d'outil : géométrie, type, nature... ;
- Pièce ayant subi un traitement thermique inadapté ;
- Temporisation trop courte entre chaque trou percé et notamment en perçage SL ;
- ...

La demande de brevet FR 2 625 123 décrit un dispositif adapté aux unités de perçage pneumatiques autonomes qui permet de détecter des incidents de perçage tels que la cassure de l'outil en cours de perçage ou bien la cassure lors du perçage précédent ou l'absence d'outil. La détection s'effectue en comparant l'effort axial de pénétration du forêt à une valeur seuil.

**Objet de l'invention**

Dans le domaine aéronautique en particulier et pour les pièces notamment qui sont critiques en ce qui concerne la sécurité par exemple, la présence d'une ou plusieurs des anomalies présentées ci-dessus n'est pas souhaitable.

On cherche donc à détecter leur présence et à les quantifier le plus tôt possible, c'est-à-dire en particulier pendant le perçage d'ébauche afin de rebuter la pièce ou choisir la démarche la plus appropriée pour les supprimer lors des étapes de finition.

Par ailleurs la connaissance du type d'anomalie, de sa sévérité et de ses conséquences sur les propriétés mécaniques permettrait un meilleur contrôle/qualité des pièces sans faire appel systématiquement aux Contrôles Non Destructifs, conduisant de ce fait à un gain de temps appréciable.

L'invention a donc pour objectif principal la détection d'au moins l'un des types d'anomalies rapportées ci-dessus, ces anomalies étant considérées seules ou en combinaison, à l'occasion du perçage d'un trou et par des moyens non destructifs.

L'invention a également pour objectif de quantifier le ou les types d'anomalies.

L'invention a également pour objectif, la détection d'au moins une anomalie à partir d'efforts tridimensionnels acquis en fonction du temps pendant l'opération de perçage, l'acquisition de tels paramètres pouvant être effectuée avantageusement à partir d'une table de mesure conventionnelle ne nécessitant pas de capteurs sophistiqués.

**Résumé de l'invention**

Conformément à l'invention, on atteint ces objectifs avec un Procédé de détection et éventuellement de quantification d'anomalies de perçage dans une pièce métallique (4), telles que Collage de Copeaux Isolés, CCI, Bande de Matière Cisaillée, BMC, ou de Zone Affectée Thermo-Mécaniquement, ZATM, le perçage étant réalisé par un foret (10), caractérisé par le fait qu'il consiste à déterminer d'une part, à partir de signaux fournis par des capteurs représentatifs des efforts du foret sur la pièce, un ensemble de valeurs des deux paramètres suivants, en fonction du temps à savoir l'effort axial de pénétration du foret (10) dans la pièce métallique (4) $Fz(t)$ et le couple $C(t)$, engendrés pendant au moins une partie de l'opération de perçage entre le temps t0 de l'entrée de la pointe (11) du foret et le temps t4 de la fin du débourrage, puis d'en isoler les valeurs $Fz_{palier}$ et $C_{pailer}$ correspondant à un palier et représentatives de l'absence d'anomalie, les valeurs $Fz_{max}$ et $C_{max}$ correspondant aux valeurs maximales et représentatives de la présence d'une anomalie, et d'en déterminer ensuite les rapports $Fz_{max}/Fz_{palier}$ et/ou $C_{max}/C_{palier}$, et/ou éventuellement le rapport des aires $Aire_{Fzmax}/Aire_{Fzpalier}$ et/ou $Aire_{Cmax}/Aire_{Cpalier}$ qui sont les aires sous les courbes $Fz(t)$ ou $C(t)$ ayant pour borne inférieure $Fz_{palier}$ ou $C_{palier}$ et pour borne supérieure $Fz_{max}$ ou $C_{max}$ rapportées aux aires sous les courbes $Fz(t)$ ou $C(t)$ ayant pour borne supérieure $Fz_{palier}$ ou $C_{palier}$, de manière à rendre compte du type d'anomalies et éventuellement de sa sévérité, une anomalie de type CCI étant déterminée à partir de la plage de variation du rapport $[C_{max}/C_{palier}]_{CCI} > 1$ et un rapport $[Fz_{max}/Fz_{palier}]_{CCI} = 1$, une anomalie de type combiné CCI et BMC étant déterminée à partir de la plage de variation du rapport $[C_{max}/C_{palier}]_{CCI+BMC} > [C_{max}/C_{palier}]_{CCI} > 1$, un rapport $[Fz_{max}/Fz_{palier}]_{CCI+BMC} = 1$ et une anomalie de type combiné CCI, BMC et ZATM étant déterminée à partir de la plage de variation du rapport $[C_{max}/C_{palier}]_{CCI+BMC+ZATM} > [C_{max}/C_{palier}]_{CCI+BMC} > 1$ et un rapport $[Fz_{max}/Fz_{palier}]_{CCI+BMC+ZATM} > 1$.

D'autre part on détermine un ensemble de valeurs liées à l'usure en dépouille Vb du foret tel que $Nb_{crit.}$ correspondant au nombre critique de trous percés pour un $Vb_{crit} = 0,3min$ (réforme du foret), ainsi que Vb* et Nb* correspondant à la première apparition de l'anomalie considérée, et également à isoler les valeurs $Fz_{moy}(Nb)$ et $C_{moy}(Nb)$ en fonction du nombre de trous percés et correspondant aux valeurs moyennes des signaux à l'entrée des arêtes de coupe dans la matière, et en déterminer les rapports $FZ_{moy}(Nb)/Fz_{moy}(Nb=1)$ et/ou $C_{moy}(Nb)/C_{moy}(Nb=1)$, et/ou éventuellement le rapport des aires $Aire_{Fzmoy}(Nb)/Aire_{Fzmoy}(Nb=1)$ et/ou $Aire_{Cmoy}(Nb)/Aire_{Cmoy}(Nb=1)$, de manière à rendre compte de l'apparition d'une anomalie liée à l'usure.

On quantifie les anomalies en définissant des critères de sévérité fonction de ces efforts et/ou de paramètres de coupe et de paramètres géométriques et/ou d'usure en dépouille du foret. En dehors de ces anomalies, toute autre anomalie engendrant un surcroît d'effort ou de couple sans faire apparaître véritablement sur les signaux une valeur palier et/ou une valeur maximale est traitée notamment par l'analyse des aires. La valeur palier est alors déduite d'un essai de perçage avec les mêmes paramètres de coupe sans qu'une anomalie soit engendrée, dans le cas où ce ne sont pas les paramètres de coupe (Vc, f) qui sont à l'origine de l'anomalie.

Ainsi le procédé de l'invention porte sur au moins l'une des caractéristiques suivantes :

- l'analyse des signaux de l'effort Fz et du couple C déduit des efforts transversaux (Fx et Fy) ;
- le calcul des rapports entre une valeur maximale et une valeur minimale (valeur palier) de l'effort de pénétration (Fz) et du couple (C) ;
- le calcul des aires sous les courbes des signaux ainsi que celui de leurs rapports ;
- le calcul des longueurs de bavure (Lb), des angles d'inclinaison des rayures (β') laissées par les becs ou les listels lors de la remontée du foret ;

- le calcul du temps de perçage (tp) et du temps de débourrage (td) comme moyens de contrôle d'une erreur de programmation ;
- l'observation des halos de couleurs en entrée et/ou en sortie de trou comme moyen non destructif pour la détection de la morphologie de la ZATM et pour l'évaluation de la profondeur affectée.
- l'analyse des conséquences de l'usure en Vb du foret sur l'allure des signaux et leurs paramètres caractéristiques ;

On connaît le brevet EP 1342534 qui porte sur un dispositif de détection d'anomalies de l'outil de perçage dans une installation de perçage de pièces métalliques. On retrouve dans ce document l'exploitation de valeurs mesurées pendant l'opération de perçage représentatives de la variation du couple exercé par l'outil sur la pièce. Ces valeurs permettent de déterminer quand il est nécessaire de changer d'outil mais aucune information sur la qualité du trou n'en est tirée.

On décrit maintenant le procédé de l'invention plus en détail en regard des dessins annexés sur lesquels :

La figure 1 illustre un foret avec une tête en forme de pointe tronconique et deux arêtes de coupe ;
La figure 2 est une représentation du dispositif de perçage ;
La figure 3 illustre le schéma de la chaîne d'acquisition des efforts Fz et C ;
La figure 4 illustre les différentes étapes du perçage et les paramètres géométriques liés au perçage ;
La figure 5 est une représentation de la variation dans le temps de l'effort axial Fz pour un trou sans anomalie ;
La figure 6 est une représentation de la variation dans le temps du couple C pour un trou sans anomalie ;
La figure 7 montre la surface d'un demi trou type sans anomalie avec
une photo 7a de la surface sur laquelle sont observées les stries d'usinage et les rayures hélicoïdales ;
une photo 7b au MEB des stries d'usinage espacées d'une demi avance et d'une rayure hélicoïdale inclinée d'un angle β' ;
une photo 7c au MO de l'état microstructural au bord d'un trou sans anomalie, sur lequel il est observé une très légère zone écrouie ;

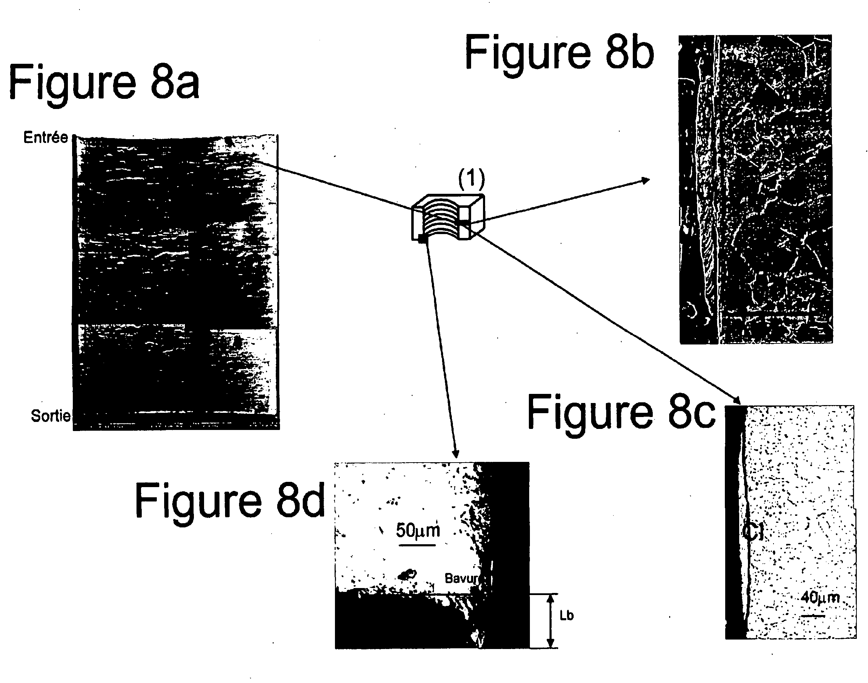

La figure 8 se rapporte à un demi-trou type avec CCI, avec
une cartographie au MEB 8a illustrant une multitude de copeaux isolés, orientés dans la direction perpendiculaire à l'axe du trou et répartis uniformément de l'entrée à la sortie du trou ;
une photo au MO 8b illustrant une mauvaise adhésion d'un copeau isolé à partir d'une coupe longitudinale d'un trou type avec CCI ;
une photo au MO 8c illustrant un CI plus ou moins enfoncé avec une bonne adhésion à la surface du trou ;
une photo au MO 8d de la bavure en sortie d'un trou type avec CCI ;

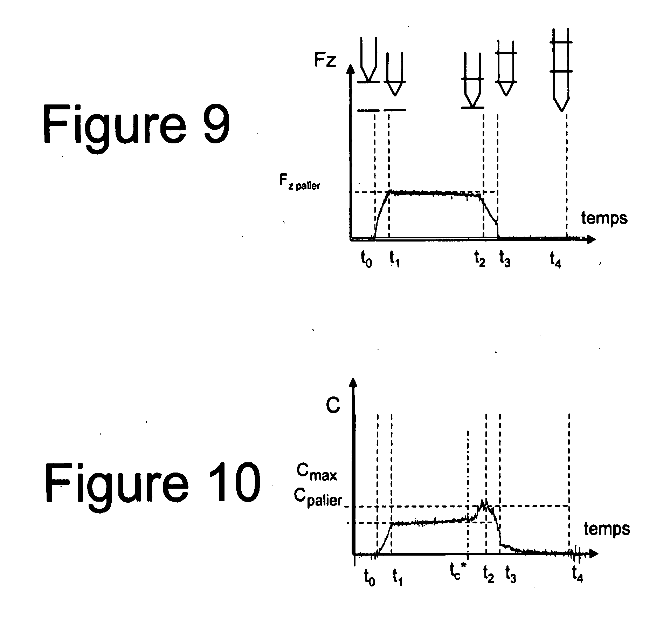

La figure 9 représente la variation dans le temps de l'effort Fz dans le cas du CCI ;
La figure 10 représente la variation dans le temps du couple C dans le cas du CCI ;

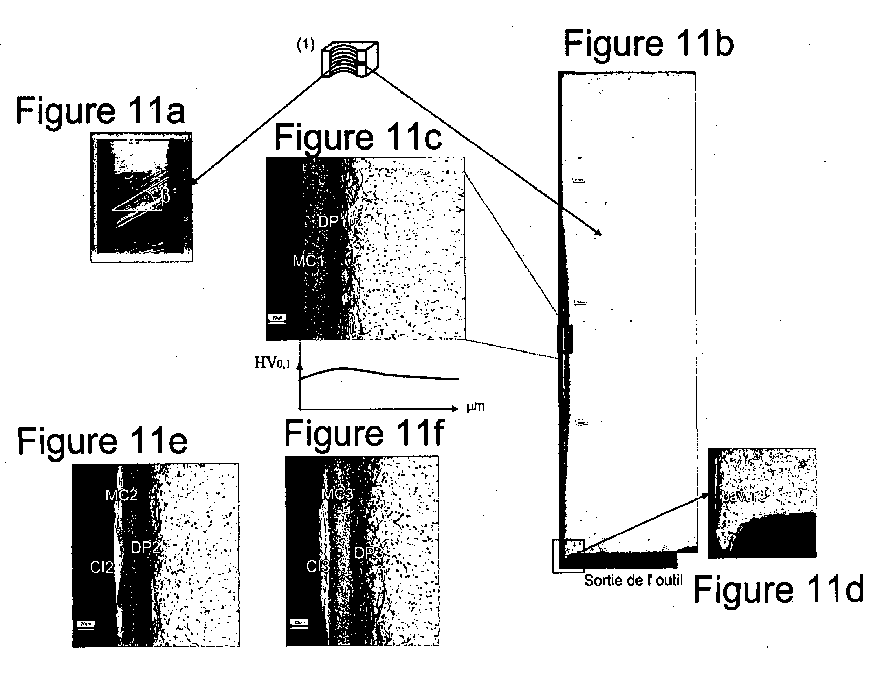

La figure 11 se rapporte à un demi trou type avec CCI+BMC, avec
une photo 11a de la surface sur laquelle est observée une multitude de rayures hélicoïdales à la surface du trou, orientées suivant un angle β';
une photo au MO 11b à partir d'une coupe longitudinale : les photos 11c, 11d, 11e et 11f sont des vues agrandies en quatre endroits distincts du bord du trou ;
la photo au MO 11c illustrant une bande de Matière Cisaillée MC1 avec une bande sous-jacente de Déformation Plastique DP1 pour un trou type avec CCI+BMC ;
la photo au MO 11d de la bavure en sortie d'un trou type avec CCI+BMC ;
la photo 11e illustre au MO un Copeau Isolé CI2 enfoncé dans de la Matière Cisaillée MC2, suivie d'une bande de Déformation Plastique DP2 ;
la photo 11f illustre au MO un Copeau Isolé CI3 soudé sur de la Matière Cisaillée MC3, suivie d'une bande de Déformation Plastique DP3 ;

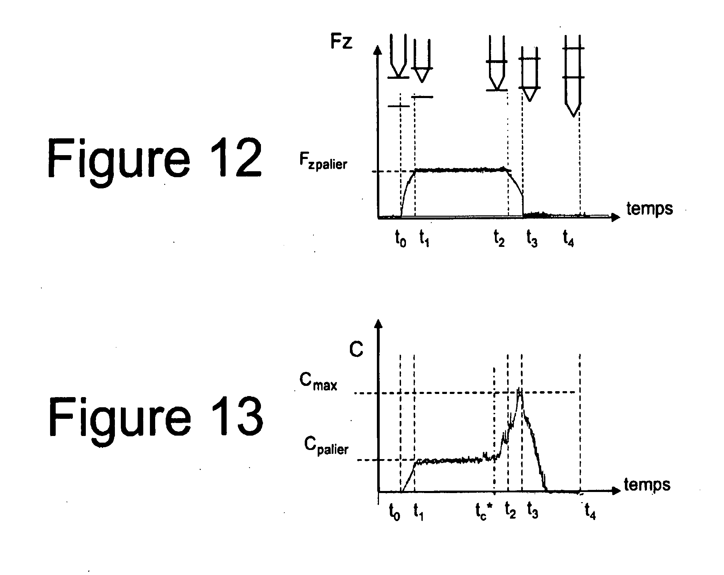

La figure 12 représente la variation dans le temps de l'effort Fz dans le cas d'un trou type avec une combinaison d'anomalies (CCI+BMC) ;
La figure 13 représente la variation dans le temps du couple C dans le cas d'un trou type avec une combinaison d'anomalies (CCI+BMC) ;

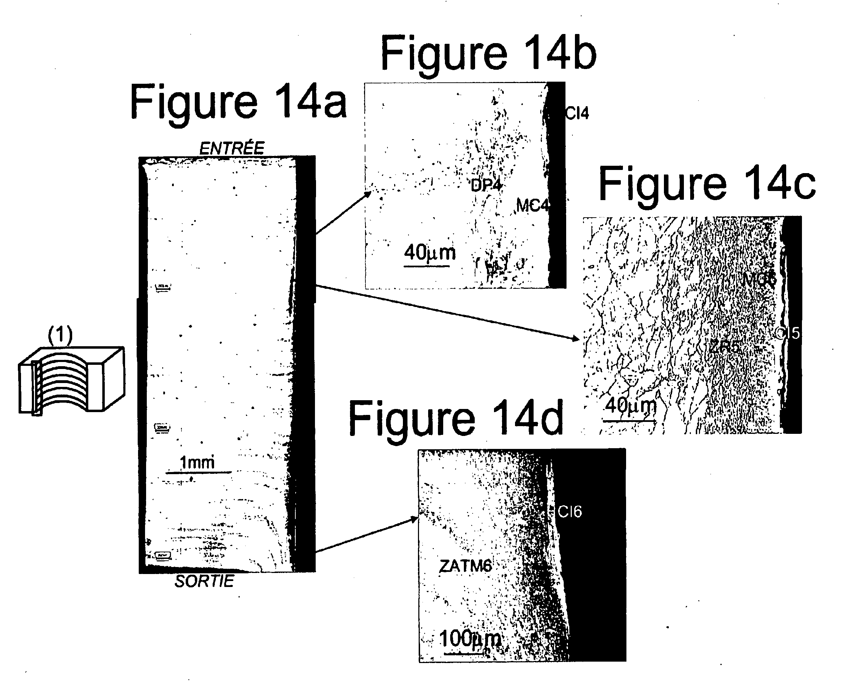

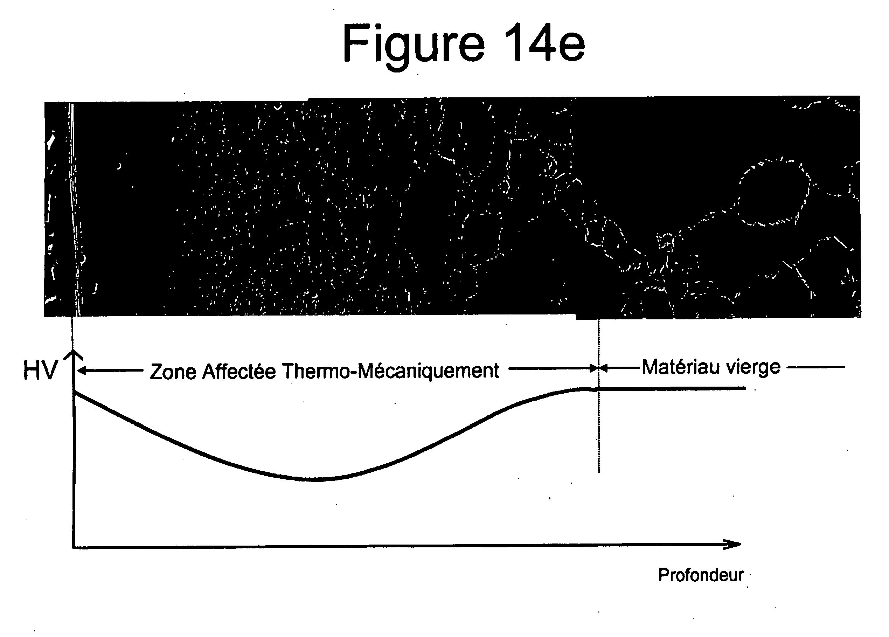

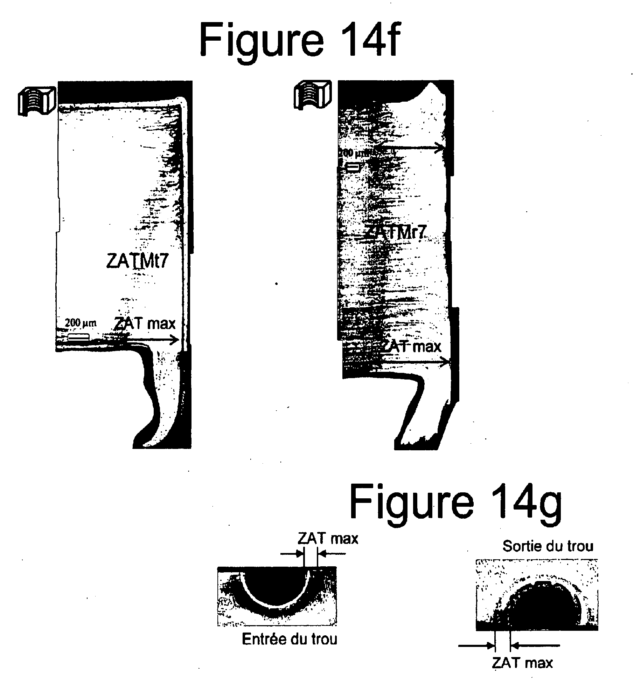

La figure 14 se rapporte à un trou type avec une combinaison d'anomalies CCI+BMC+ZATM avec
une photo 14a d'une coupe longitudinale : les photos 14b, 14c, 14d et 14e, sont des vues agrandies en quatre endroits distincts du bord du trou ;
la photo 14b illustre au MO un Copeau Isolé CI4 enfoncé dans de la Matière Cisaillée MC4 suivie d'une zone de Déformation Plastique DP4 ;
la photo 14c illustre au MO un Copeau Isolé CI5 soudé sur de la Matière Cisaillée MC5 suivie d'une Zone Recristallisée ZR5 ;

la photo 14d illustre au MO un Copeau Isolé CI6 enfoncé dans une ZATM6 ;

la photo 14e illustre au MEB une ZATM localisée en sortie d'un trou type CCI+BMC+ZATM ;

la photo 14f montre deux photos au MO illustrant la forme de la ZATM à partir de coupes longitudinales : ZATM triangulaire (ZATMt7) et ZATM rectangulaire (ZATMr7) ;

la photo 14g montre deux photos illustrant des halos de couleurs, en entrée et en sortie d'un trou type CCI+BMC+ZATMr ;

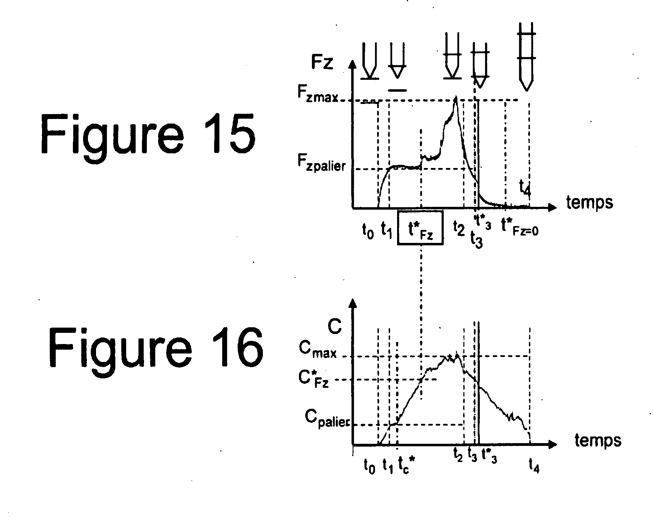

La figure 15 représente la variation dans le temps de l'effort Fz dans le cas d'un trou type avec une combinaison d'anomalies (CCI+BMC+ZATM) ;

La Figure 16 représente la variation dans le temps du couple C dans le cas d'un trou type avec une combinaison d'anomalies (CCI+ BMC+ZATM) ;

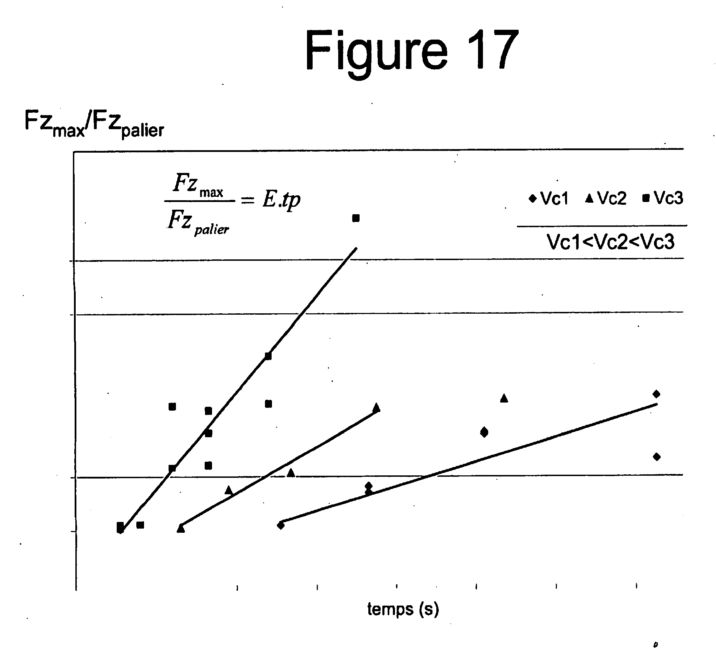

La figure 17 est un graphique représentant le rapport $Fz_{max}/Fz_{palier}$ en fonction du temps de perçage tp dans le cas d'un trou type avec CCI+BMC+ZATM;

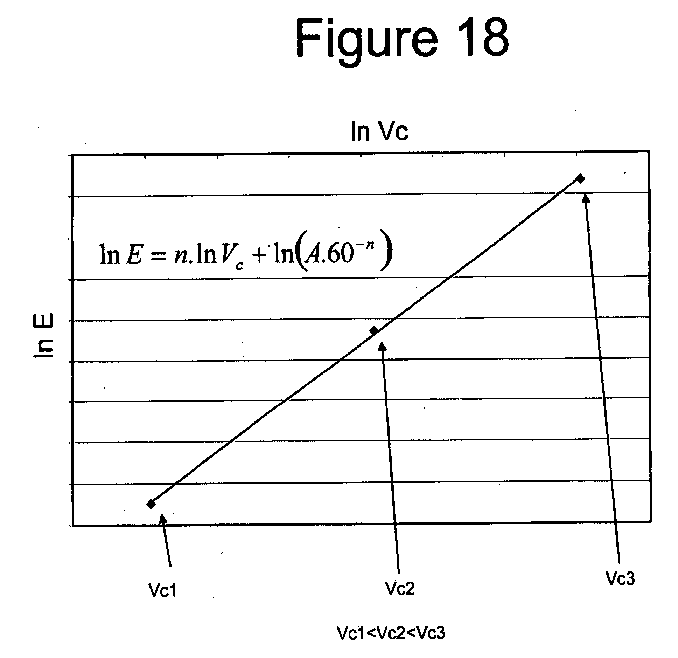

La figure 18 est un graphique représentant E en fonction de Vc en échelle logarithmique dans le cas d'un trou type avec CCI+BMC+ZATM;

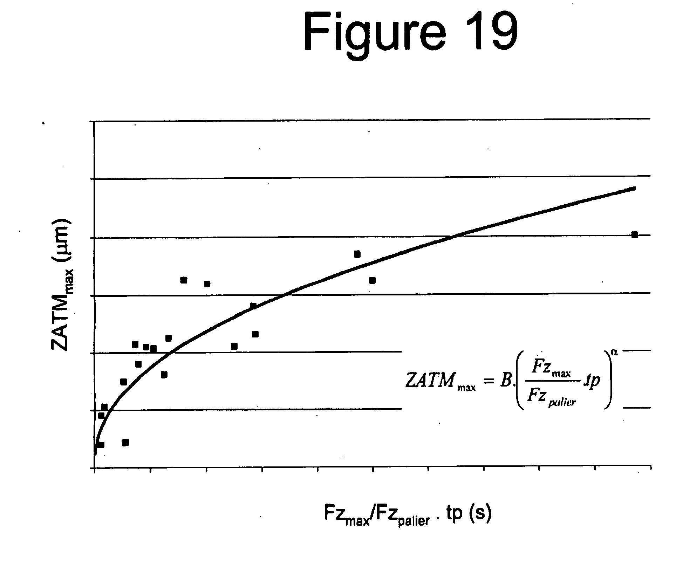

La figure 19 est un graphique représentant la ZATM$_{max}$ mesurée en fonction du produit $\dfrac{Fz_{max}}{Fz_{palier}} \cdot tp$ dans le cas d'un trou type avec CCI+BMC+ZATM ;

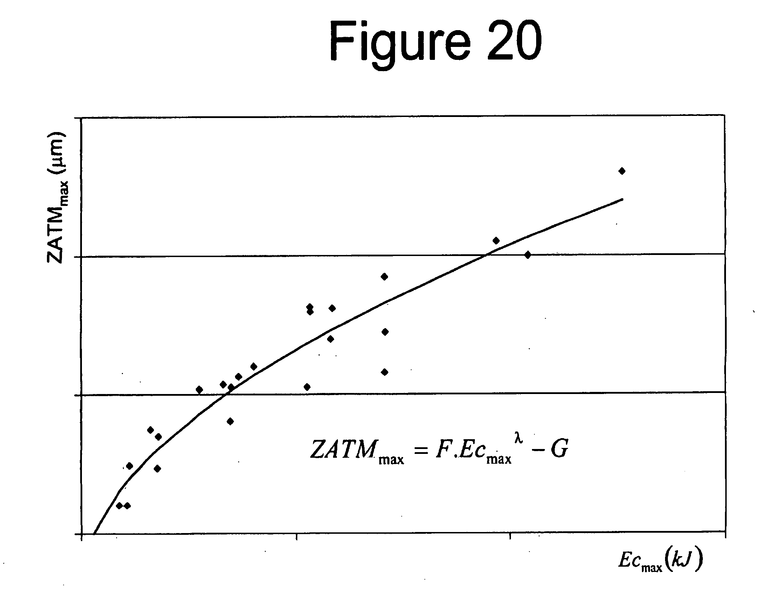

La figure 20 est un graphique représentant la ZATM$_{max}$ mesurée en fonction de l'énergie maximale Ec$_{max}$ dissipée à la coupe déduite du couple max C$_{max}$, de Vc, de D et du temps de perçage tp, dans le cas d'un trou type avec CCI+BMC+ZATM;

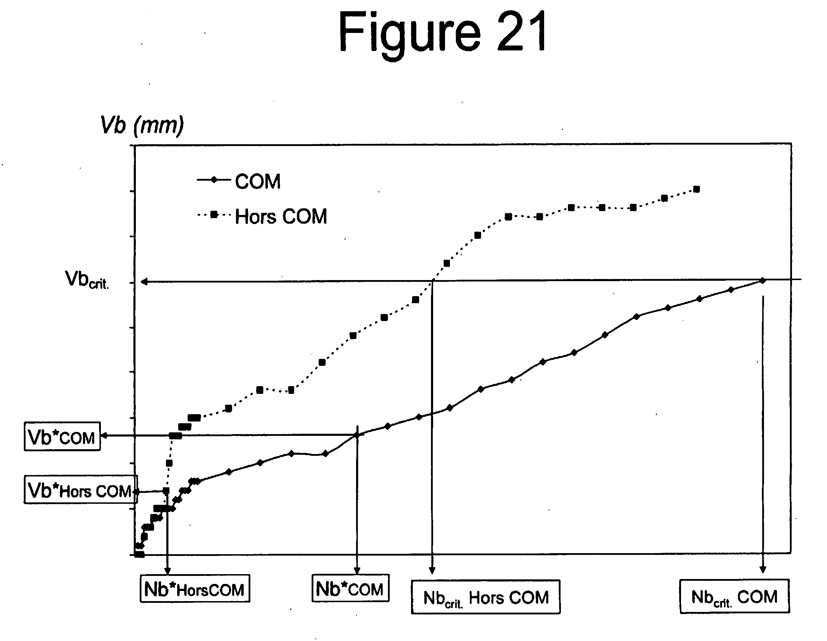

La figure 21 est une courbe représentant l'usure frontale Vb en fonction du nombre de trous percés pour la condition optimale de coupe COM et une autre condition de coupe Hors COM pour laquelle le 1er trou percé avec un outil neuf ne présente pas d'anomalies ;

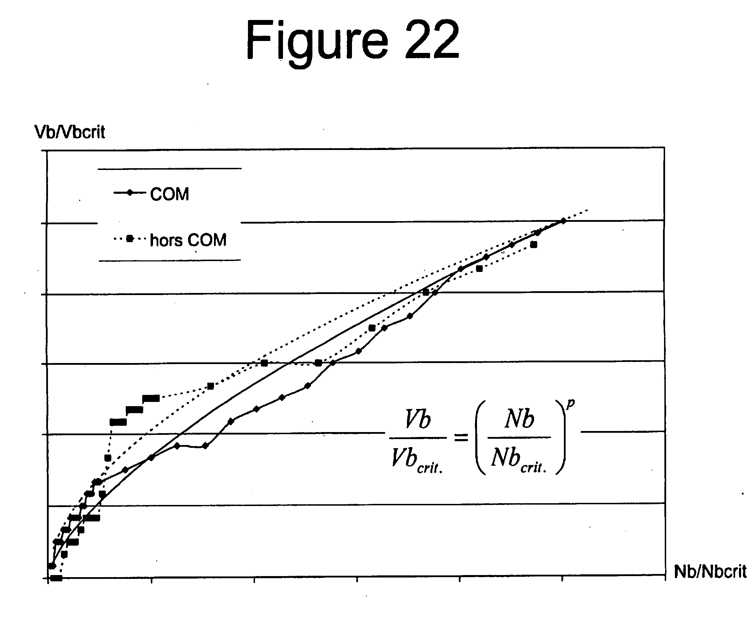

La figure 22 est une courbe représentant Vb/Vb$_{crit.}$ en fonction de Nb/Nb$_{crit.}$ pour la condition optimale de coupe COM et une autre condition de coupe Hors COM pour laquelle le 1er trou percé avec un outil neuf ne présente pas d'anomalies ;

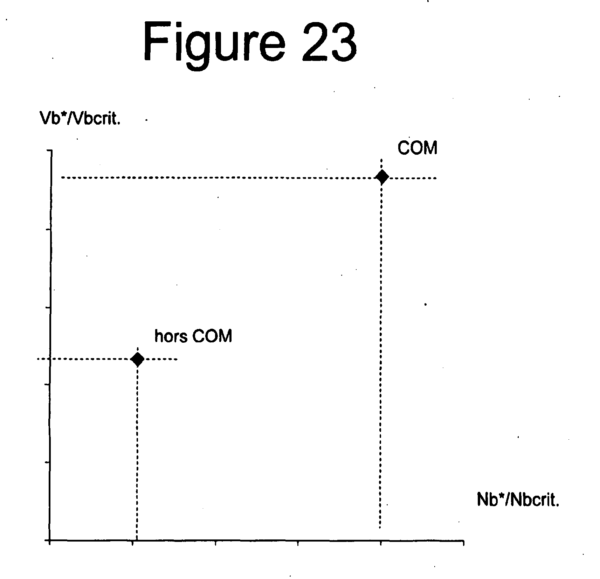

La figure 23 est une courbe maîtresse représentant, pour la condition COM et une condition hors COM, l'usure frontale normalisée Vb*/Vb$_{crit.}$ en fonction du nombre de trous normalisé Nb*/Nb$_{crit.}$ correspondant à l'apparition de l'anomalie considérée pour l'ensemble Outil/Matière étudié ;

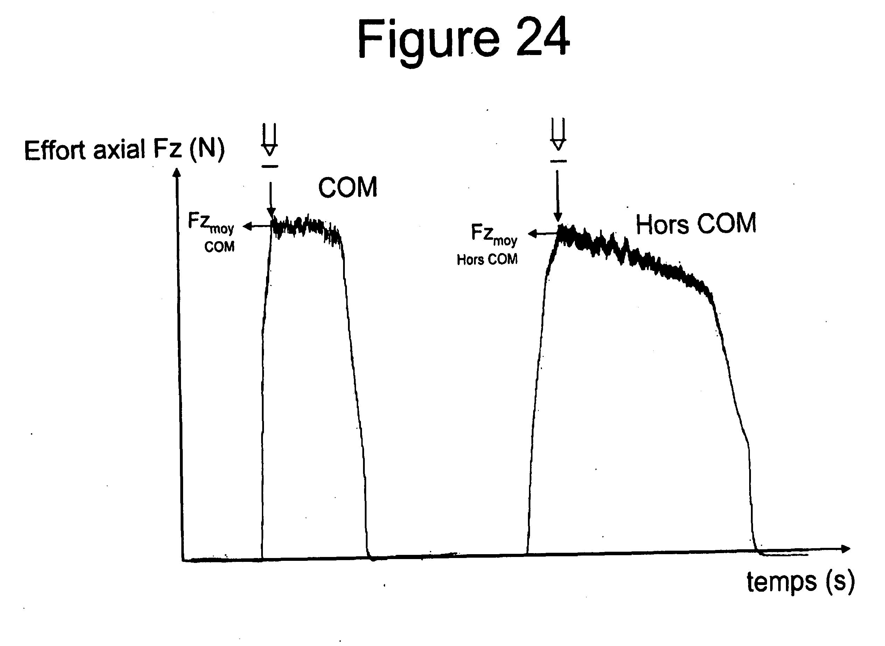

La figure 24 est un enregistrement des signaux PM types de l'effort Fz pour la condition COM et une condition Hors COM après un certain nombre Nb de trous percés et une usure frontale Vb du foret pour l'ensemble Outil/Matière étudié ;

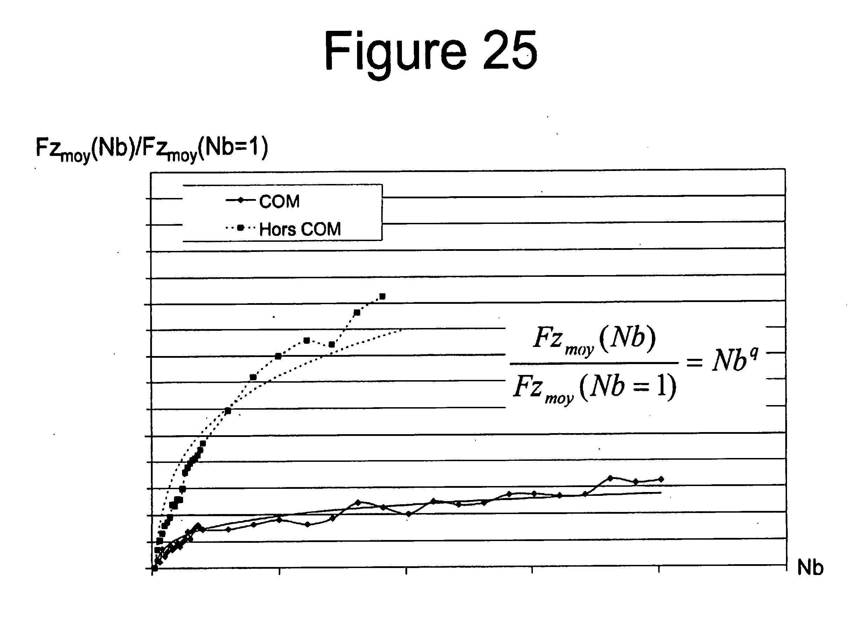

La figure 25 est un graphique représentant Fz$_{moy}$(Nb)/Fz$_{moy}$(Nb=1) en fonction de Nb pour la condition COM et une condition Hors COM ;

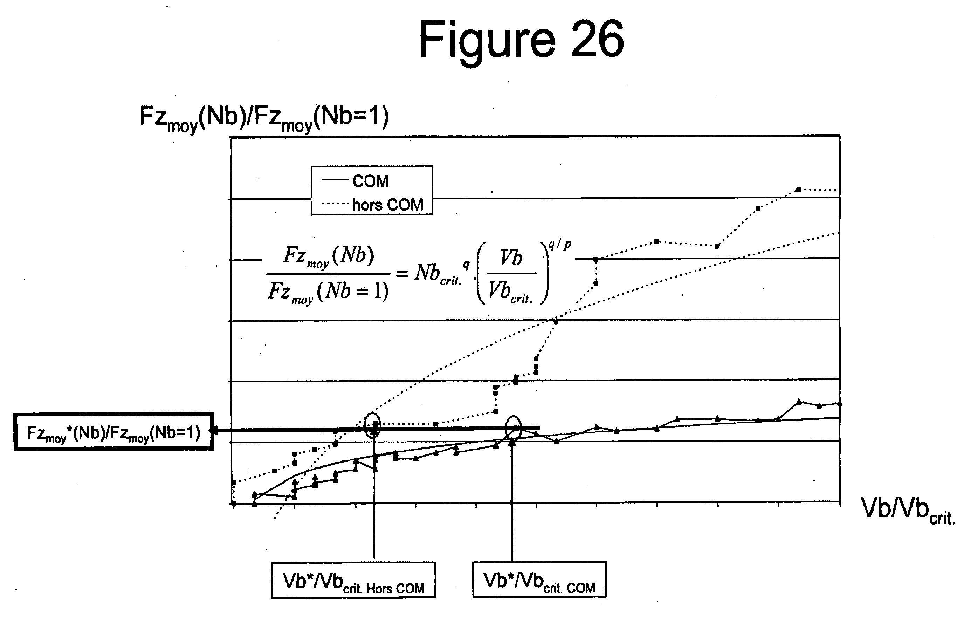

La figure 26 est un graphique représentant Fz$_{moy}$(Nb)/Fz$_{moy}$(Nb=1) en fonction de l'usure normalisée Vb/Vb$_{crit.}$, pour la détermination du critère de détection Fz*$_{moy}$(Nb*)/Fz$_{moy}$(Nb=1) de l'anomalie considérée (CCI), indépendant des conditions de coupe et pour l'ensemble outil / matière étudié ;

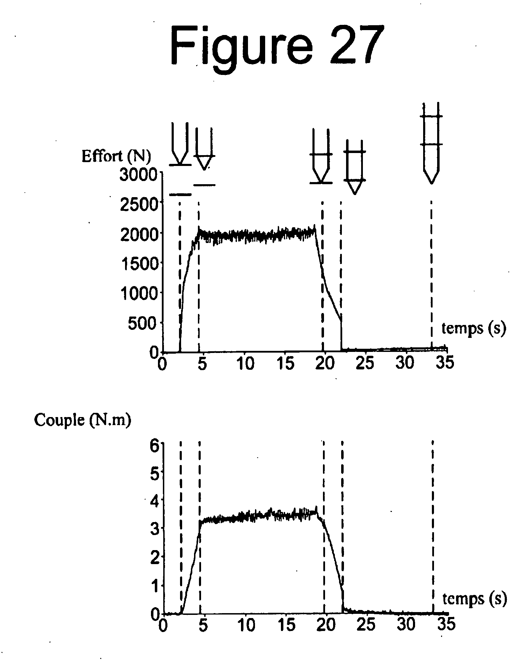

La figure 27 est un exemple d'enregistrement de l'effort et du couple pour un trou type sans anomalie (AL Vc=8m/min f=0,08mm/tour) ;

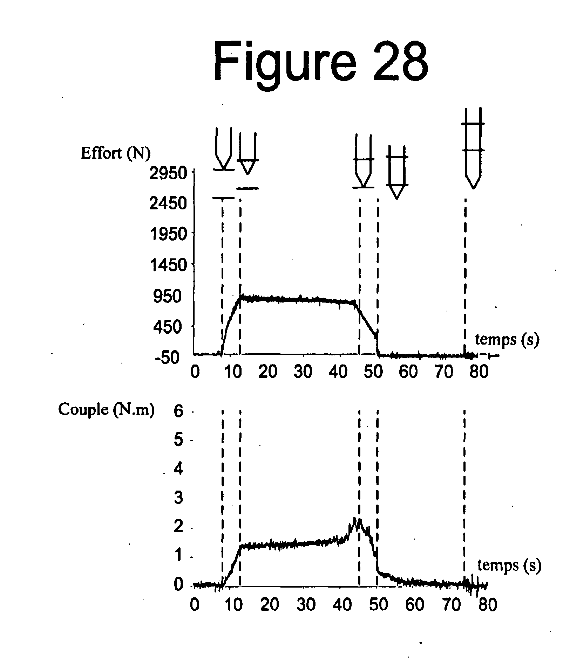

La figure 28 est un exemple d'enregistrement de l'effort et du couple pour un trou type avec du CCI (SL Vc=15m/min f=0,02mm/tour) ;

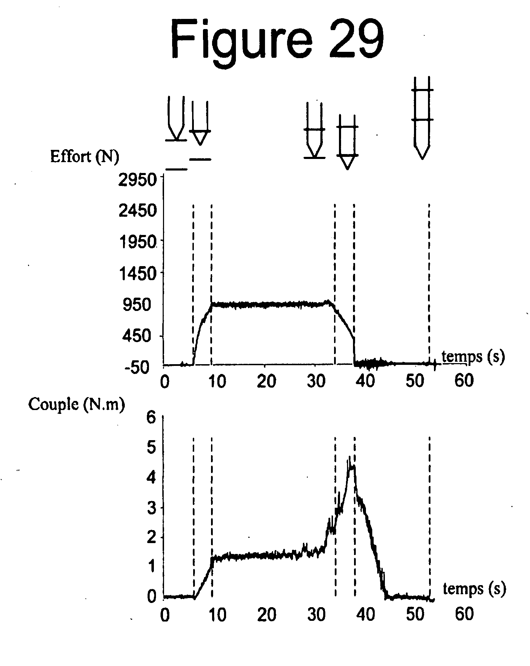

La figure 29 est un exemple d'enregistrement de l'effort et du couple pour un trou type avec du CCI+BMC (SL Vc=20m/min f=0,02mm/tour) ;

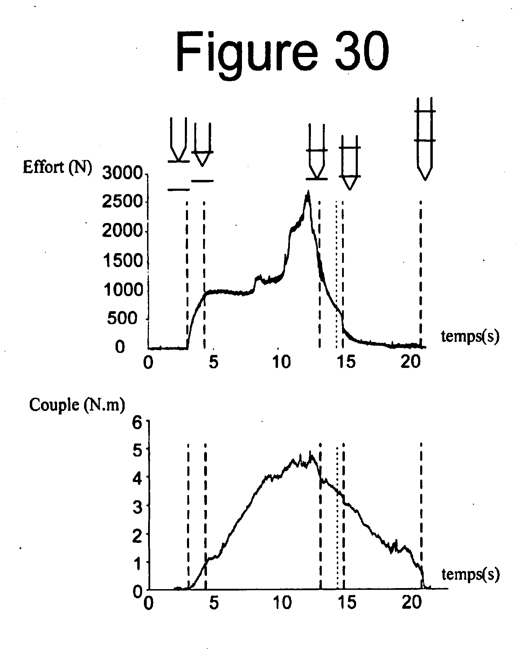

La figure 30 est un exemple d'enregistrement de l'effort et du couple pour un trou type avec du CCI+BMC+ZATM (SL Vc=55m/min f=0,02mm/tour) ;

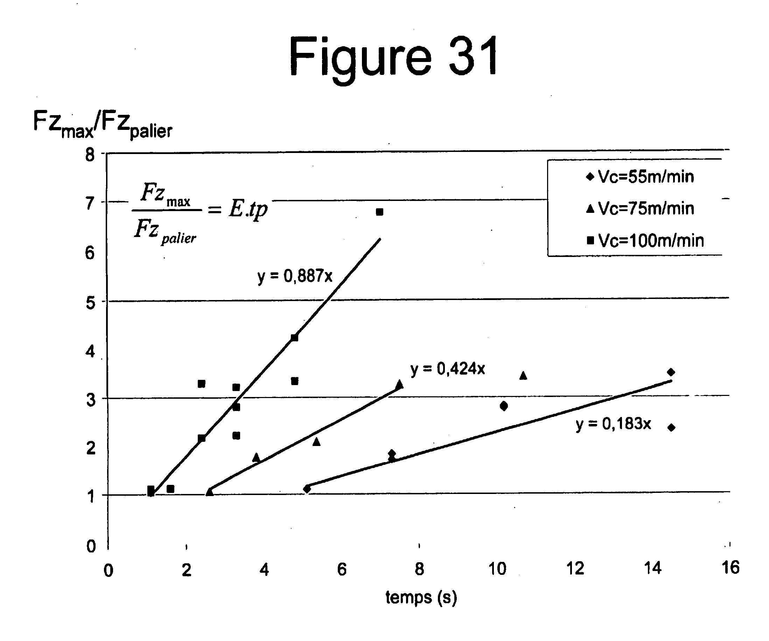

La figure 31 est un exemple d'un graphique représentant le rapport Fz$_{max}$/Fz$_{palier}$ en fonction du temps de perçage tp dans le cas d'un trou type avec CCI+BMC+ZATM et pour l'ensemble Outil WC-Co revêtu / Matière Inconel 718TR ;

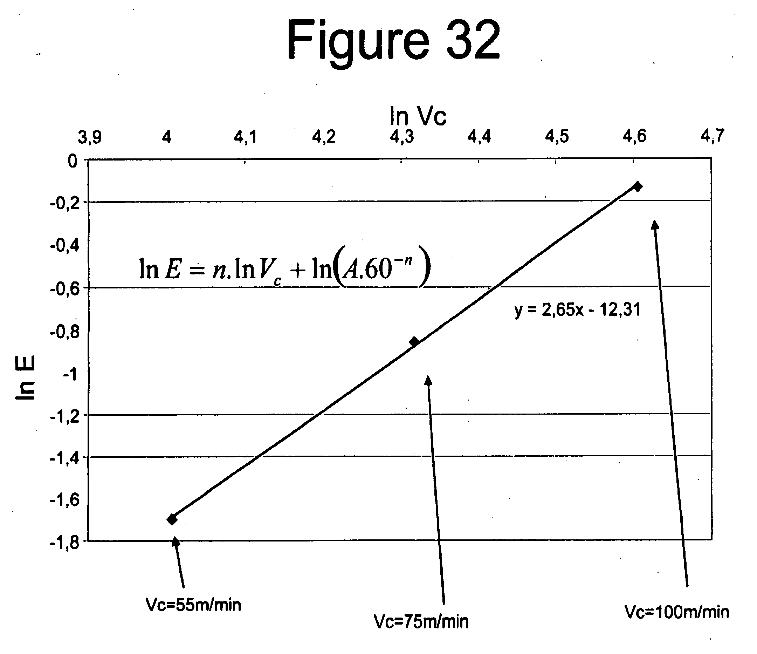

La figure 32 est un exemple d'un graphique représentant E en fonction de Vc en échelle logarithmique dans le cas d'un trou type avec CCI+BMC+ZATM et pour l'ensemble Outil WC-Co revêtu / Matière Inconel 718TR ;

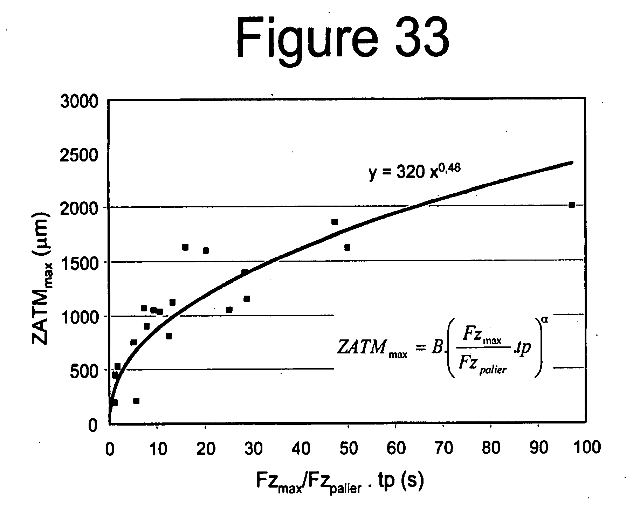

La figure 33 est un exemple d'un graphique représentant les valeurs de la ZATM$_{max}$ mesurée en fonction du produit $\dfrac{Fz_{max}}{Fz_{palier}} \cdot tp$ dans le cas d'un trou type avec CCI+BMC+ZATM et pour l'ensemble Outil WC-Co revêtu / Matière Inconel 718TR ;

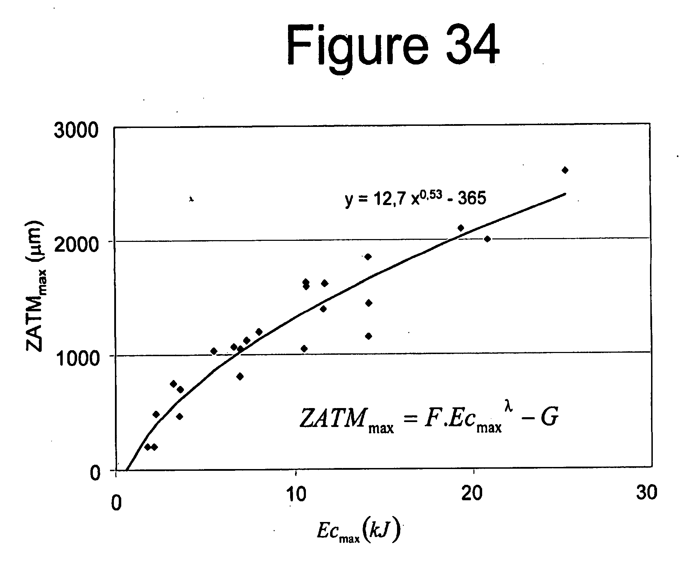

La figure 34 est un exemple d'un graphique représentant les valeurs de la $ZATM_{max}$ mesurée en fonction de l'énergie maximale $Ec_{max}$ dissipée à la coupe déduite du couple max $C_{max}$, de Vc, de D et du temps de perçage tp, dans le cas d'un trou type avec CCI+BMC+ZATM et pour l'ensemble Outil WC-Co revêtu / Matière Inconel 718TR;

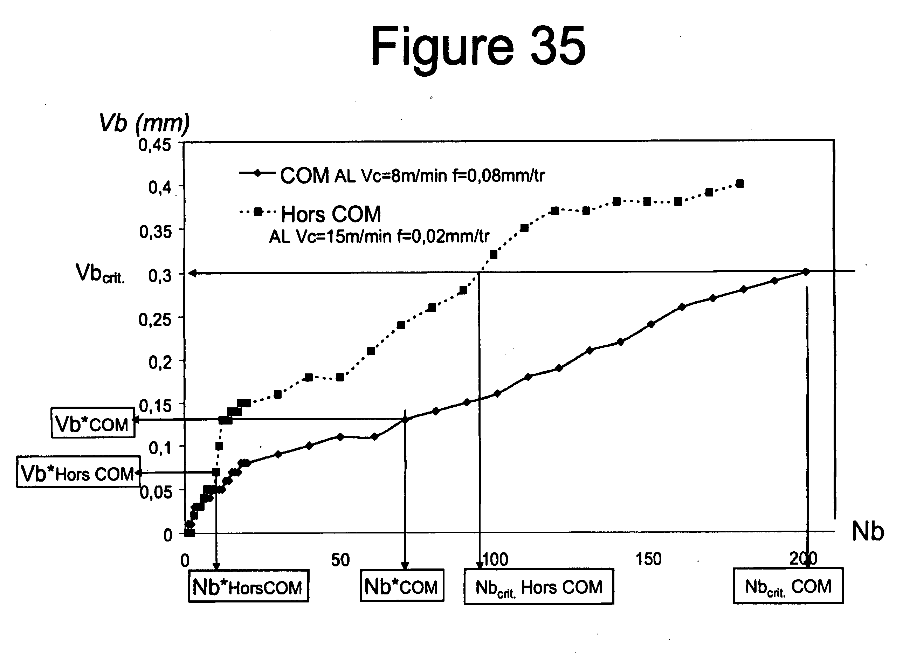

La figure 35 est un exemple d'une courbe représentant l'usure frontale Vb en fonction du nombre de trous percés pour la condition optimale de coupe AL Vc=8m/min f=0,08mm/tour (COM) et une autre condition de coupe AL Vc=15m/min f=0,02mm/tour (Hors COM) pour laquelle le 1er trou percé avec un outil neuf ne présente pas d'anomalies ;

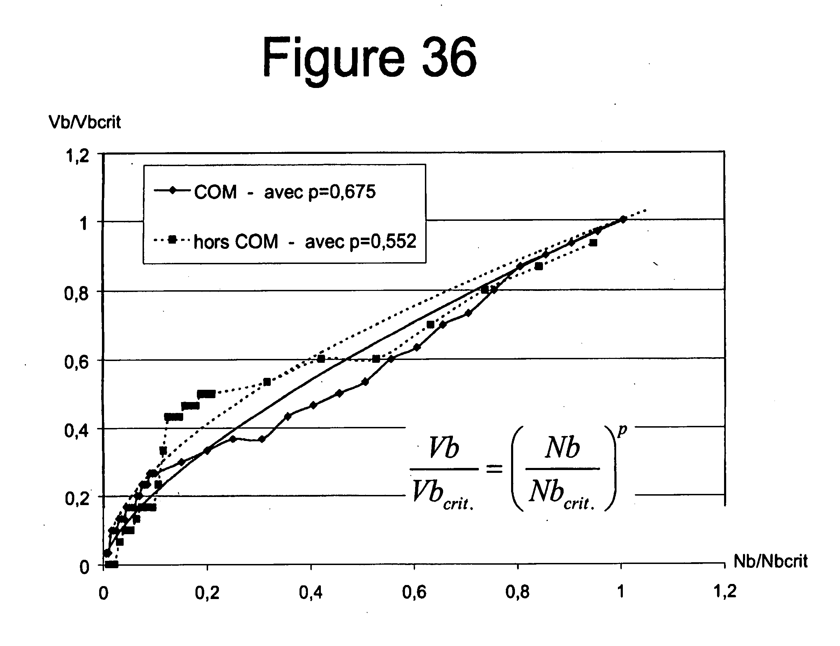

La figure 36 est un exemple d'une courbe représentant $Vb/Vb_{crit}$. en fonction de $Nb/Nb_{crit}$. pour la condition optimale de coupe AL Vc=8m/min f=0,08mm/tour (COM) et une autre condition de coupe AL Vc=15m/min f=0,02mm/tour (Hors COM) pour laquelle le 1er trou percé avec un outil neuf ne présente pas d'anomalies ;

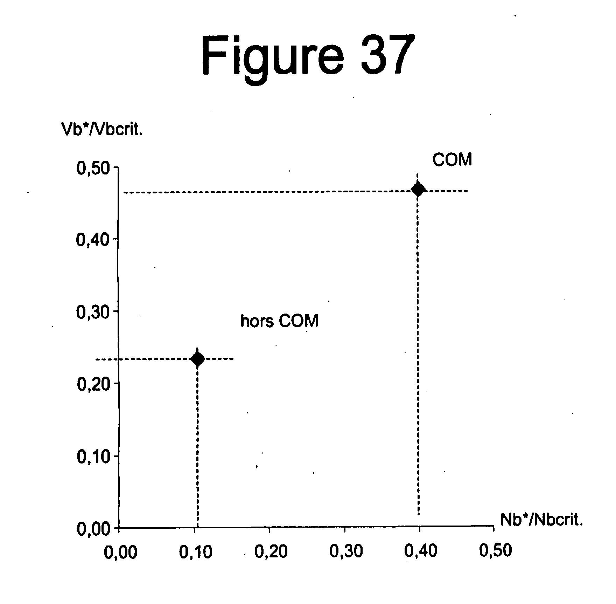

La figure 37 est un exemple d'une courbe maîtresse représentant, pour la condition COM AL Vc=8m/min f=0,08mm/tour et une condition Hors COM AL Vc=15m/min f=0,02mm/tour, l'usure frontale normalisée $Vb^*/Vb_{crit}$. en fonction du nombre de trous normalisé $Nb^*/Nb_{crit}$. correspondant à l'apparition de l'anomalie considérée (CCI+BMC) pour l'ensemble Outil/Matière étudié ;

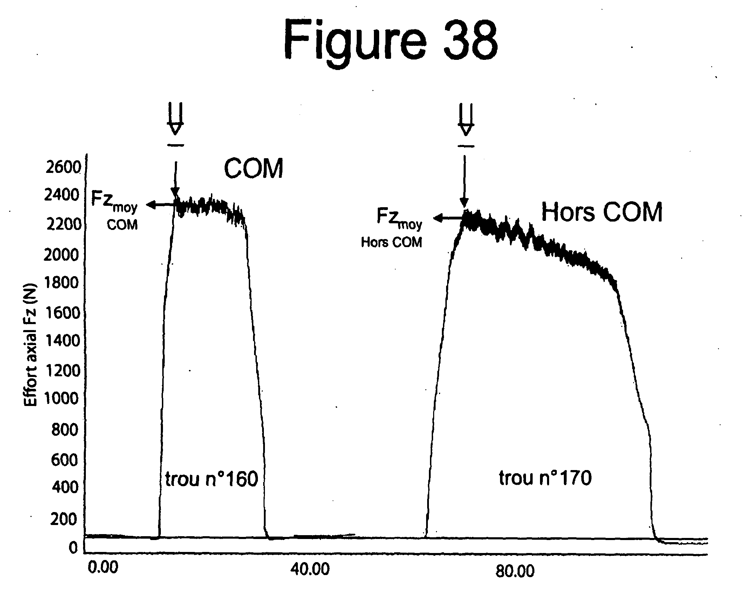

La figure 38 est un exemple d'un enregistrement des signaux PM types de l'effort Fz pour la condition COM AL Vc=8m/min f=0,08mm/tour et une condition Hors COM AL Vc=15m/min f=0,02mm/tour après un certain nombre Nb de trous percés et une usure frontale Vb du foret pour l'ensemble Outil/Matière étudié ;

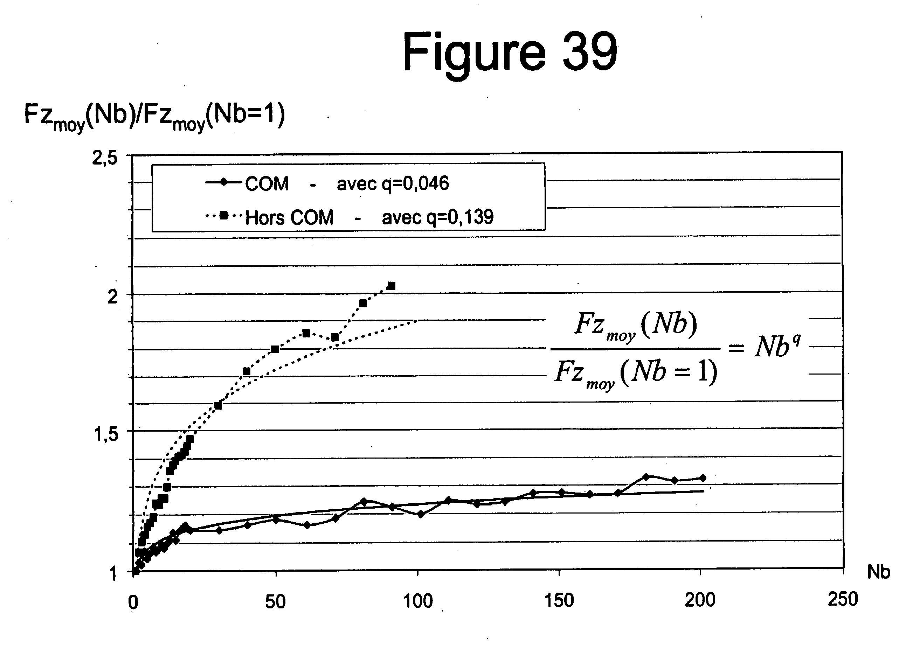

La figure 39 est un exemple d'un graphique représentant $Fz_{moy}(Nb)/Fz_{moy}(Nb=1)$ en fonction de Nb pour la condition COM AL Vc=8m/min f=0,08mm/tour et une condition Hors COM AL Vc=15m/min f=0,02mm/tour ;

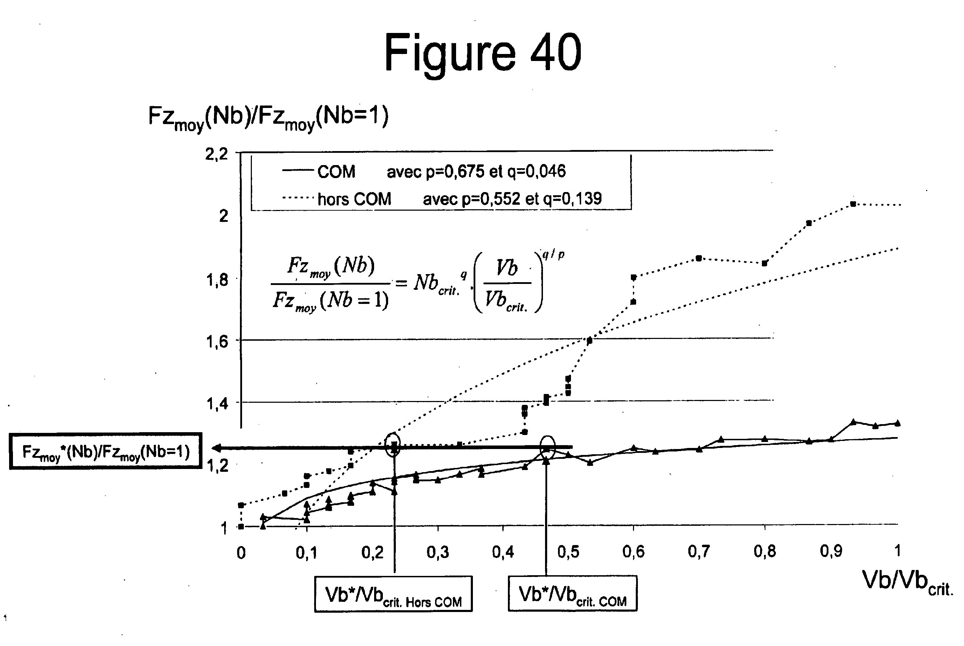

La figure 40 est un exemple d'un graphique représentant $Fz_{moy}(Nb)/Fz_{moy}(Nb=1)$ en fonction de l'usure normalisée $Vb/Vb_{crit.}$, pour la détermination du critère de détection $Fz^*_{moy}(Nb^*) / Fz_{moy}(Nb=1)$ de l'anomalie considérée (CCI+BMC), indépendant des conditions de coupe et pour l'ensemble outil WC-Co revêtu / matière Inconel 718TR ;

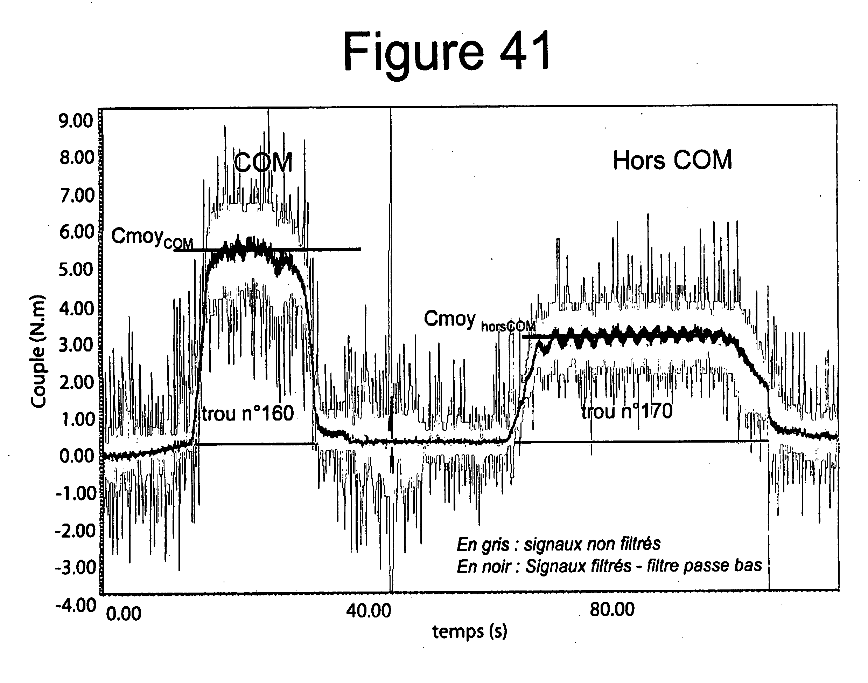

La figure 41 est un exemple d'un enregistrement des signaux PM types du couple C pour la condition COM AL Vc=8m/min f=0,08mm/tour et une condition Hors COM AL Vc=15m/min f=0,02mm/tour après un certain nombre Nb de trous percés et une usure frontale Vb du foret pour l'ensemble Outil/Matière étudié ;

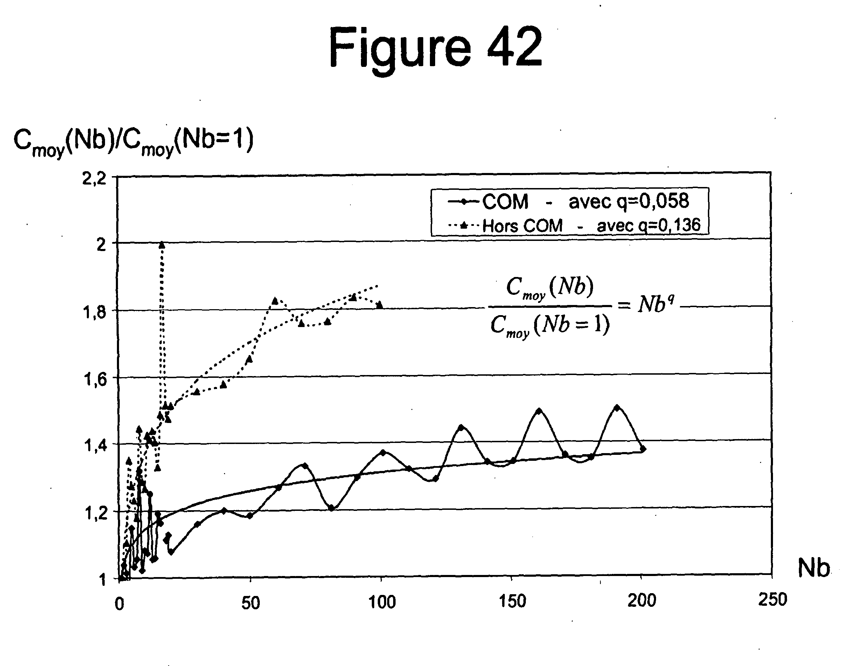

La figure 42 est un exemple d'un graphique représentant $C_{moy}(Nb)/C_{moy}(Nb=1)$ en fonction de Nb pour la condition COM AL Vc=8m/min f=0,08mm/tour et une condition Hors COM AL Vc=15m/min f=0,02mm/tour ;

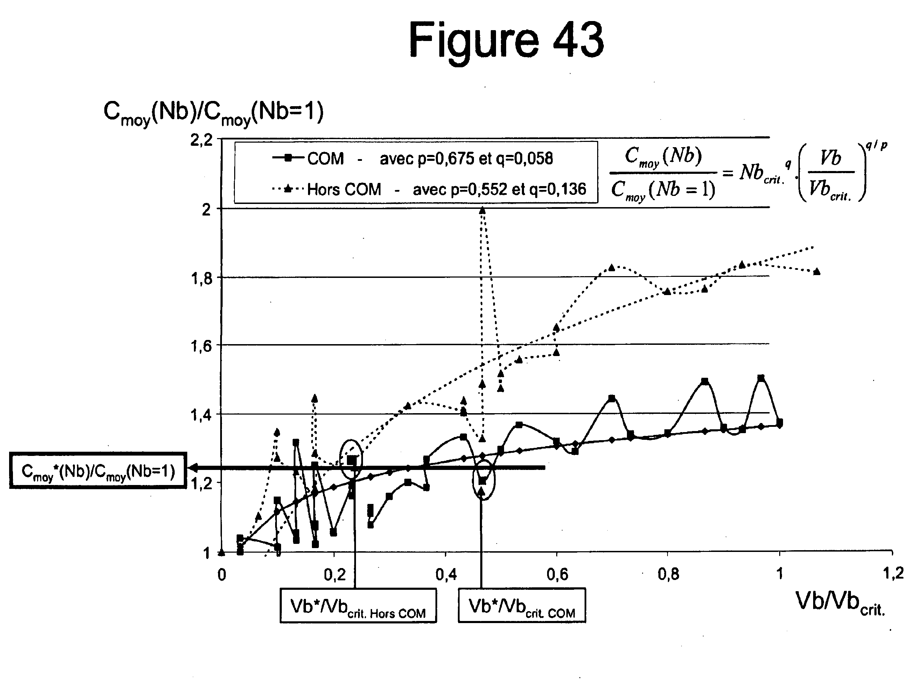

La figure 43 est un exemple d'un graphique représentant $C_{moy}(Nb)/C_{moy}(Nb=1)$ en fonction de l'usure normalisée $Vb/Vb_{crit.}$, pour la détermination du critère de détection $C^*_{moy}(Nb^*) / C_{moy}(Nb=1)$ de l'anomalie considérée (CCI+BMC), indépendant des conditions de coupe et pour l'ensemble outil WC-Co revêtu / matière Inconel 718TR.

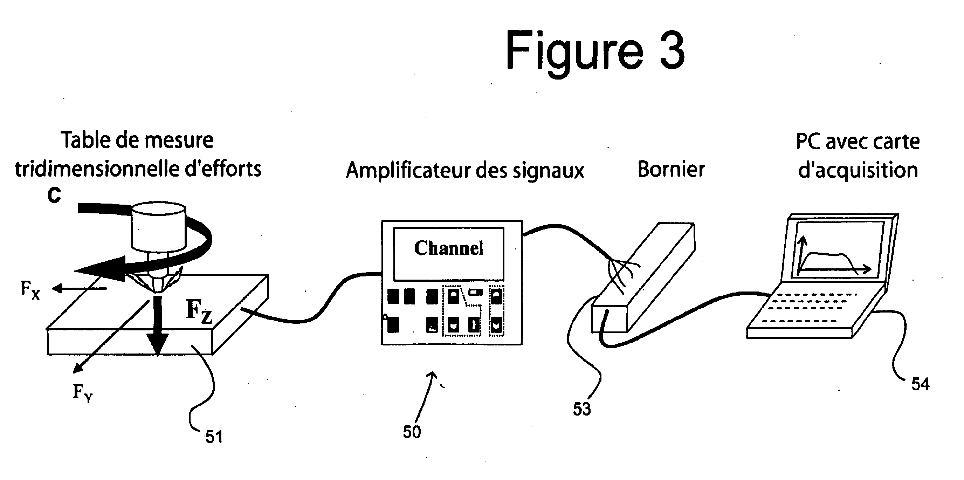

Comme on le voit sur la figure 3 pour ce qui concerne la chaîne 50 d'acquisition des signaux Fz et C, les paramètres effort axial de pénétration (Fz) du foret 10 dans le matériau 4 et le couple (C) déduit des efforts transversaux sont enregistrés en fonction du temps au moyen d'une chaîne d'acquisition. Celle-ci est dotée d'une table de mesure d'efforts tridimensionnels 51, équipée de capteurs piézo-électriques, sur laquelle sont fixés l'étau 5 et la pièce 4, ici non représentés. Ces capteurs enregistrent les signaux représentatifs des efforts transversaux (Fx, Fy) et axial (Fz) puis ceux-ci sont amplifiés en 52. Une fois l'amplification effectuée, les signaux sont échantillonnés par une carte d'acquisition (bornier) 53, reliée à un micro-ordinateur 54. Un logiciel d'acquisition du signal permet ensuite d'effectuer divers traitements pour faciliter l'analyse temporelle des efforts de coupe, comme par exemple le filtrage des signaux Fz et C par un filtre passe bas. Le couple C engendré par le foret 10 sur la pièce est une combinaison linéaire des efforts transversaux Fx et Fy. En un point M de la table de mesure défini par ses coordonnées x et y, le couple est donné par la relation suivante : $C = C_0 + x.Fy - y.Fx$ où

Co est la valeur du couple au point (x=0 et y=0).

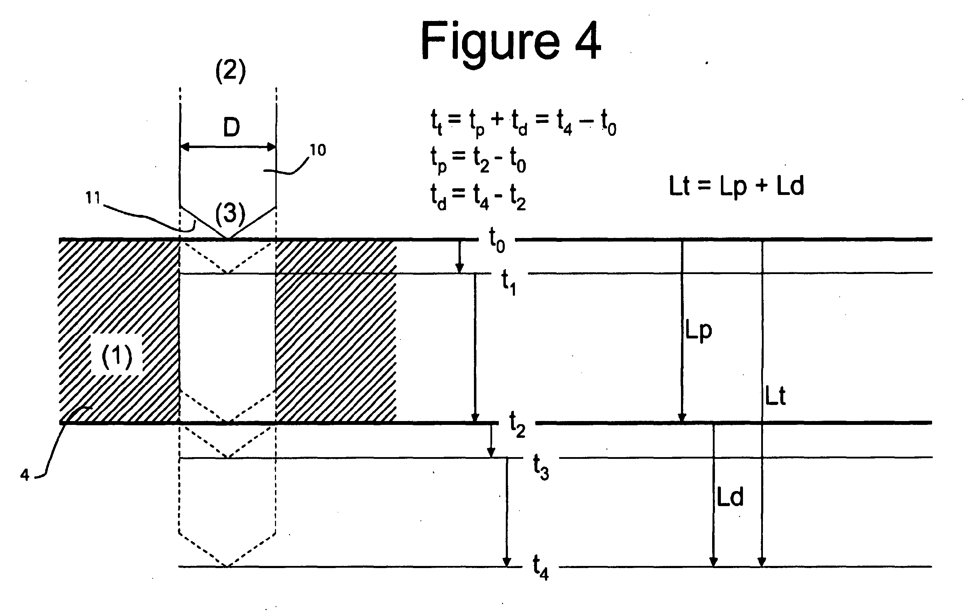

Sur la figure 4 sont distinguées les différentes étapes d'une opération de perçage dans une plaque métallique 4 d'épaisseur Lp. Le foret 10, de diamètre D avec une pointe tronconique 11 est placé en contact contre la pièce au temps $t_0$. Les périodes successives jusqu'au temps $t_4$ qui marque la fin du débourrage sont les suivantes :

$t_1$-$t_0$ : entrée de la pointe 11 du foret,
$t_2$-$t_1$ : phase de perçage par les becs 12 du foret,
$t_3$-$t_2$ : sortie de la pointe 11 du foret,
$t_4$-$t_3$ : frottement des listels 14 à la surface du trou juste avant la remontée du foret,
$t_2$-$t_0$ : phase de perçage d'une longueur percée Lp sans débourrage de la pointe 11,
$t_3$-$t_0$ : perçage du trou avec débourrage de la pointe 11,
$t_4$-$t_2$ : débourrage du foret sur la longueur Ld juste avant sa remontée.

Les paramètres optimaux de coupe, notamment la vitesse périphérique (Vc) et l'avance par tour (f) pour un foret et une matière donnés se situent à l'intérieur d'un domaine étroit défini par la norme du Couple Outil-Matière (norme AFNOR NF E 66-520-8). Ce domaine dit de fonctionnement maximise la durée de vie du foret en minimisant les efforts spécifiques de coupe Kca et Kct. Il correspond systématiquement à l'absence totale d'anomalie. On note que le domaine sans anomalie défini pour un foret neuf par trou est bien plus large que le domaine de fonctionnement du foret (COM). Cependant, un type d'anomalie apparaît systématiquement à partir d'un nombre de trous Nb* bien inférieur à celui correspondant au critère d'usure en dépouille (Vb$_{crit.}$=0,3), entraînant la réforme du foret. Aussi, il apparaît que le COM préserve plus le foret que la matière. En effet, le domaine sans anomalie se réduit voire disparaît suivant le degré d'usure en dépouille des arêtes du foret et ce avant que le foret soit réformé.

On a établi une matrice d'essais de façon à faire varier dans une large gamme les paramètres de coupe (Vc, f) et les paramètres géométriques du trou (Lp, D). Outre des conditions de coupe AL, fortement éloignées des conditions optimales déduites de la norme AFNOR NF E 66-520-8, on a considéré le perçage SL avec des conditions de coupe tout aussi extrêmes (par exemple jusqu'à 10 fois la vitesse de coupe optimale et 1/5 de l'avance optimale) afin de mettre au mieux en évidence la génération d'anomalies. De ce fait, on a percé chaque trou avec un foret neuf (Vb=0) pour s'assurer d'une bonne reproductibilité des anomalies.

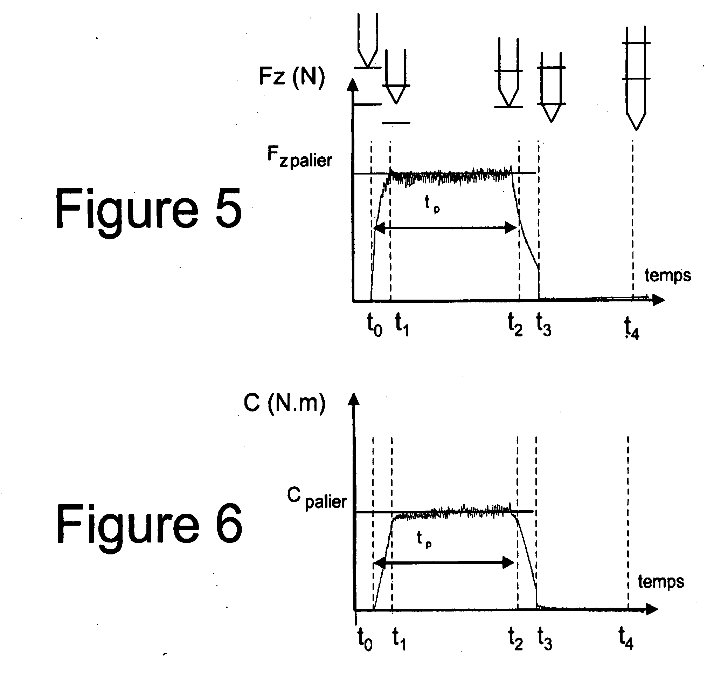

Dans le cas d'une opération de perçage effectuée sans anomalie, on a constaté que, pour un foret et un matériau donnés, le couple C engendré par le foret et l'effort axial de pénétration Fz du foret dans le matériau présentaient un régime stationnaire (valeurs indépendantes du temps) pendant la phase de perçage par les becs du foret, entre les temps $t_1$ et $t_2$. Les figures 5 et 6 illustrent la variation de ces paramètres en fonction du temps.

Dans le cas d'un trou sans anomalie, une coupe longitudinale démontre que :

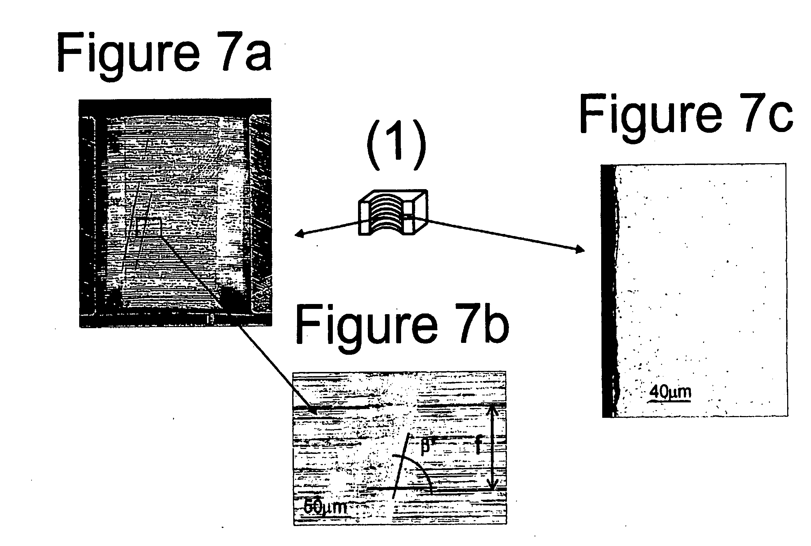

- Les stries d'usinage sont régulièrement espacées d'une demi-avance (foret à deux becs) ou de l'avance (foret à un bec), et sont inclinées d'un angle voisin de 0° par rapport à un axe perpendiculaire à l'axe du trou (figure 7a);
- Des rayures hélicoïdales peu profondes sont produites par les becs à la remontée du foret (figure 7b) et sont inclinées d'un angle β' ;
- L'état métallurgique du trou n'est pas affectée thermiquement (figure 7c); il est observé éventuellement un très léger écrouissage en surface s'accompagnant de contraintes résiduelles ;
- Aucune variation de micro-dureté n'est observée au bord du trou ;
- La rugosité du trou est normale, c'est-à-dire représentative de la profondeur des stries d'usinage pour l'avance considérée ;
- La surface latérale du trou et sa face d'entrée et de sortie ont une couleur inchangée traduisant l'absence d'oxydation et d'une élévation de température importante au bord du trou ;
- La bavure, traduisant un refoulement de matière, est quasi inexistante à la sortie comme à l'entrée du trou.

On a constaté que l'on pouvait détecter les anomalies engendrées au bord du trou à partir de la forme des courbes de variation de Fz et de C pendant l'opération de perçage. La sévérité de ces anomalies passe par l'évaluation de critères et par leur encadrement entre une limite inférieure et une limite supérieure.

Le cas échéant, l'aire sous la courbe des signaux est déterminée pendant l'opération de perçage.

Un ensemble de valeurs supplémentaires (tp, td, t*$_{Fz=0}$ et t$_3$*) est relevé sur les signaux afin, d'une part de vérifier l'exactitude de la programmation des paramètres de coupe (Vc, f), et d'autre part de retrouver par le calcul certaines caractéristiques géométriques du trou (β', Lb).

Des examens destructifs, incontournables pour rendre compte de la sévérité des anomalies, consistent en une analyse métallographique de coupes longitudinales de trous types. Les corrélations entre les états microstructuraux, la typologie des signaux Fz et C, les rapports Fz$_{max}$/Fz$_{palier}$, C$_{max}$/C$_{palier}$ ou le cas échéant les rapports Aire$_{Fzmax}$/Aire$_{Fzpalier}$, Aire$_{Cmax}$/Aire$_{Cpalier}$, et leurs domaines de variation entre une limite inférieure et supérieure ont conduit à classer et à quantifier les anomalies selon trois types.

On a constaté que le rapport C$_{max}$/C$_{palier}$ était le plus significatif pour la caractérisation de tout type d'anomalies. Néanmoins, le rapport Fz$_{max}$/Fz$_{palier}$ permet de rendre compte de la dégradation du foret généré pendant un perçage, et ce dans le domaine des sévères anomalies (brûlures). Pour tout type d'anomalies (CCI, BMC et ZATM), le rapport C$_{max}$/C$_{palier}$ augmente lorsque Vc croît et f décroît. Seule l'épaisseur maximale de la zone affectée thermo-mécaniquement, ZATM$_{max}$, a pu être explicitée en fonction des paramètres de coupe et des paramètres géométriques du trou :

$$ZATM_{max} = B.\left(A'.V_c^{n-2}.L_p^{2}.D^2.f^{-2}\right)^{\alpha}$$

Le critère de sévérité défini par l'épaisseur de ZATM$_{max}$ peut également être exprimée en fonction de l'énergie maximale Ec$_{max}$ dissipée à la coupe déduite du couple max C$_{max}$, de Vc, de D et du temps de perçage tp :

$$ZATM_{max} = F \cdot \left( \frac{10^3 . C_{max} . V_c}{30 . D} \cdot tp \right)^{\lambda} - G \quad \text{avec} \quad Ec_{max} = \frac{10^3 . C_{max} . V_c}{30 . D} \cdot tp$$

### Description du 1er trou type avec CCI

Ce premier trou type est composé d'une anomalie dite de Collage de Copeaux Isolés (CCI). Les observations d'un grand nombre d'échantillons ont permis de définir les caractéristiques de ce type d'anomalie :

- Les Copeaux Isolés (CI) sont soudés sur la surface du trou de la pièce 4, et orientés dans la direction perpendiculaire à l'axe du trou (figure 8a) ;
- La rugosité est importante ;
- Aucune coloration et donc oxydation n'est observée à la surface du trou et sur les faces d'entrée et de sortie, signe d'une élévation modérée de température au bord du trou ;
- L'adhérence des copeaux isolés est variable (figure 8b) ;
- Les copeaux sont plus ou moins enfoncés dans la matière (figure 8c) ;
- La métallurgie du trou n'est pas affectée thermiquement ; cependant une faible zone écrouie est présente à la surface du trou, s'accompagnant de contraintes résiduelles ;
- Aucune variation de micro-dureté dans l'épaisseur du matériau n'est détectée ;
- La bavure est de faible ampleur à la sortie du trou (figure 8d) et inexistante à l'entrée du trou.

La génération de ce type d'anomalie est difficilement détectable et quantifiable par les signaux Fz et C. Pour certains ensembles outil/matière, et/ou pour une certaine usure d'outil initiale en dépouille, les efforts peuvent plus ou moins mettre en évidence ce type d'anomalie. En général, les variations dans le temps des paramètres Fz et C correspondant au CCI ont les allures montrées sur les figures 9 et 10, et les observations sont les suivantes :

- L'effort axial présente un régime stationnaire défini par $Fz_{palier}$. Parfois, on constate une légère diminution du paramètre Fz entre $t_1$ et $t_2$, qui semble témoigner d'une élévation de température abaissant la limite d'élasticité du matériau usiné ;
- Pour le couple, et après qu'un palier s'est établi ($C_{palier}$), ce dernier présente de légères fluctuations à partir de tc*, peu avant $t_2$, et jusqu'à ce que les arêtes de coupe débouchent à $t_3$. Cette légère augmentation du couple à partir de tc* résulte d'une élévation de température suffisante en fin de perçage qui favorise d'une part le frettage entre le foret et le trou, et d'autre part le collage d'une quantité conséquente de copeaux mal évacués.

Si l'augmentation du couple s'était produite bien plus tôt entre $t_1$ et $t_2$, on aurait très certainement observé la formation d'une BMC, voire même d'une ZATM (ces deux autres types d'anomalies sont présentés ci-après) en plus du CCI.
Le collage de copeaux isolés est donc détectable à partir de la plage de variation du rapport $[C_{max}/C_{palier}]_{CCI}>$ 1 et un rapport $[Fz_{max}/Fz_{palier}]_{CCI}=1$. L'abondance du CCI passe par l'évaluation du rapport $C_{max}/C_{palier}$ (ou des aires) lequel constitue le critère de sévérité du CCI. Le taux de recouvrement de copeaux à la surface latérale du trou croît lorsque le rapport $C_{max}/C_{palier}$ augmente.

### Description du 2ème trou type avec CCI+BMC

Ce trou type se caractérise par une Bande de Matière fortement Cisaillée et malaxée, dite BMC, accompagnée parfois de l'anomalie CCI. Cette BMC résulte d'un malaxage entre la matière en surface du trou et une forte concentration de copeaux isolés. Cet ensemble de matière cisaillée est ensuite matée à la surface du trou pendant la coupe puis lissée par les listels lors de la remontée du foret.
Les observations sur une coupe longitudinale du trou ont permis de définir les caractéristiques suivantes de ce type d'anomalie :

- Une multitude de rayures hélicoïdales à la surface de la BMC, engendrées par les listels lors de la remontée du foret et inclinées d'un angle β' (figure 11a) ;
- Un changement de coloration à la surface latérale du trou signe d'une oxydation (figure 11a);
- Une très faible rugosité due à l'étalement de matière pendant la phase de perçage et de remontée du foret ;
- Une hauteur partielle ou totale de la surface latérale du trou est affectée par la formation de cette Bande de Matière Cisaillée (figures 11a et 11b). Cette BMC s'accompagne d'une Bande sous-jacente de Déformation Plastique (BDP) caractérisée par une augmentation de dureté en sous-couche , qui résulte du matage des copeaux par les listels du foret pendant la coupe (figure 11c) ;
- Aucun changement métallurgique en arrière de la BDP n'est observé ;
- Une bavure à la sortie du trou de plus grande ampleur que pour le CCI (figure 11d).

En pratique, ce type de défaut BMC est le plus souvent associé à une anomalie de type CCI enfoncé (figure 11e) ou soudé (figure 11f) dans cette BMC (notion de combinaison d'anomalies).

Les figures 12 et 13 montrent, dans ce cas, la variation dans le temps des paramètres Fz et C. On observe :

- L'établissement d'un régime stationnaire en effort axial entre $t_1$ et $t_2$, et parfois une légère diminution de cet effort due à une élévation de température et donc à une diminution de la limite d'élasticité ;
- Une forte augmentation graduelle du couple à partir de tc*, peu avant $t_2$ , et jusqu'à un maximum proche de $t_3$ où les arêtes de coupe du foret débouchent ;
- Les analyses métallurgiques ont montré que tc* ne correspond pas au début de la BMC dans la profondeur du trou. En effet, le fort cisaillement de la matière se produit essentiellement au droit de la coupe. Selon les conditions sévères de perçage considérées, ce phénomène de cisaillement provoque une élévation plus ou moins rapide de la température. Arrivée à une température seuil à tc*, l'augmentation du couple peut s'expliquer par l'intensification des deux phénomènes concomitants déjà décrits pour le trou type avec CCI : d'une part un frettage plus important entre le foret et le trou, et d'autre par un collage abondant de copeaux à la surface du trou ;
- Le lissage de l'ensemble de la matière cisaillée à la surface du trou formant la BMC semble se produire pendant la phase de débourrage du corps du foret entre $t_3$ et $t_4$.

Si l'augmentation du couple s'était produite bien plus tôt entre $t_1$ et $t_2$, on aurait très certainement observé la formation d'une ZATM (cette anomalie est présentée ci-après) en plus du CCI+BMC.

La combinaison d'anomalies CCI+BMC est détectable à partir de la plage de variation du rapport $[C_{max}/C_{palier}]_{CCI+BMC} > [C_{max}/C_{palier}]_{CI} > 1$, et un rapport $[Fz_{max}/Fz_{palier}]_{CCI+BMC} = 1$. Comme pour le collage de copeaux isolés, la quantification de ce type d'anomalie se mesure par le rapport $C_{max}/C_{palier}$ ou le cas échéant par le rapport des aires. La hauteur de cette Bande de Matière Cisaillée à la surface latérale du trou croît lorsque le rapport $C_{max}/C_{palier}$ augmente.

### Description du 3ème trou type avec CCI+BMC+ZATM

Ce troisième trou type est affecté par les anomalies CCI, BMC mais également par une troisième anomalie type dite Zone Affectée Thermo-Mécaniquement, ZATM.

La figure 14 montre une coupe longitudinale d'un trou percé dans la pièce 4 dans laquelle les trois types d'anomalies sont présents et ont été agrandis en figures 14b, 14c, 14d et 14e.

Les combinaisons d'anomalies CCI et BMC représentées en figures 14b et 14c sont du même type que celles observées dans les trous types CCI+BMC (figures 11e et 11f).

Il est parfois observé une combinaison d'anomalies CCI + ZATM. La figure 14d illustre une ZATM dans laquelle est enfoncé un Copeau Isolé.

Sur la figure 14e est illustrée une Zone Affectée Thermo-Mécaniquement, ZATM, localisée en sortie de trou. Elle se caractérise par un profil de dureté en « V », c'est-à-dire une diminution de la dureté du bord du trou jusqu'à la demi profondeur de la ZATM, suivie d'une augmentation sur la deuxième moitié de la profondeur jusqu'à retrouver la dureté du matériau vierge.

Deux formes de ZATM peuvent être distinguées : une forme triangulaire (ZATMt) ou une forme rectangulaire (ZATMr), comme illustrée en figure 14f. Ces formes de ZATM sont influencées par le rapport Lp/D.

Plus généralement, une ZATM est détectée par les phénomènes suivants :

- Sur les faces d'entrée et de sortie du trou, des halos de couleurs en forme d'anneaux sont observables pour la ZATMr (figure 14g), et seulement sur la face de sortie pour la ZATMt. Le diamètre de ces halos est égal à $D+2.ZATM_{max}$.
- Ces halos de couleurs s'accompagnent d'un refoulement important de matière (bavure) à la sortie et parfois même à l'entrée du trou. La bavure à la sortie du trou peut être continue, de faible épaisseur ou discontinue/fragmentée de forte épaisseur (figure 14f). Sa présence est détectable sur le signal Fz et en particulier sa longueur est définie entre $t^*_3$ et $t^*_{Fz=0}$ correspondant au retour à charge nulle de l'effort. Proche de la sortie du trou, pour des conditions sévères de perçage, le foret extrude plus la matière qu'il ne la coupe en raison d'une forte élévation de la température du matériau (associée à une chute de ses propriétés mécaniques) et d'une dégradation des becs du foret (de type écaillage et fatigue thermique) voire d'une modification de sa géométrie.

Toutes ces caractéristiques métallurgiques et géométriques distinguent très nettement cette combinaison d'anomalies de celle mentionnée précédemment, CCI+BMC, qui présente un refoulement limité de matière, sans halo de couleur sur les faces d'entrée et de sortie du trou, et une faible dégradation du foret.

Sur les figures 15 et 16, la variation temporelle des paramètres Fz et C est représentée pour le trou type avec la combinaison d'anomalies CCI+BMC+ZATM. On observe :

- L'établissement d'un régime stationnaire en effort axial, qui parfois diminue légèrement dû à la baisse de la limite d'élasticité du matériau usiné à la suite de l'élévation de température, et ce jusqu'à $t^*_{Fz}$;
- $t^*_{Fz}$ ne correspond pas à la position du début de la ZATM dans la profondeur du trou mais rend plutôt compte d'un début d'usure du foret. Au delà de $t^*_{Fz}$, l'effort suit une montée progressive, ou une succession de petits plateaux suivie d'une montée plus franche. Cet ensemble d'évènements témoigne d'une très forte dégradation des arêtes de coupe, et donc d'une très grande difficulté qu'a le foret à usiner le matériau ;
- Le maximum de l'effort $Fz_{max}$ se trouve un peu avant $t_2$ soit avant que les arêtes de coupe usées ne débouchent. En effet, plus le foret est proche de la sortie plus il est chaud, et plus la résistance et l'épaisseur de matière sous le foret décroîent, et donc plus l'effort que doit exercer le foret pour déformer la matière diminue (formation de la bavure) ;
- Le rapport $Fz_{max}/Fz_{palier}$ rend compte de la dégradation du foret ;
- Un contrôle de la dégradation d'outil consiste à comparer le temps $t_3$ théorique, temps à partir duquel les becs du foret débouchent, à celui relevé expérimentalement $t^*_3$ sur le signal de l'effort Fz. Il s'avère que dans le cas de fortes brûlures avec une dégradation importante du foret, ce temps théorique $t_3$ est systématiquement inférieur au temps expérimental $t^*_3$. En effet, les becs du foret étant fortement dégradés (perte de géométrie), la plus grande section du foret ne se trouve plus au niveau des becs mais au dessus ;
- La longueur de la bavure en sortie peut être déterminée en repérant la durée entre $t^*_3$ et $t^*_{Fz=0}$;
- Le couple débute par un très court palier jusqu'à tc* puis augmente continuellement jusqu'à atteindre, un peu avant $t_2$, un maximum correspondant au maximum de l'effort ;
- Contrairement aux deux autres trous types CCI et CCI+BMC, ce trou type CCI+BMC+ZATM présente un tc* beaucoup plus tôt entre $t_1$ et $t_2$, et les phénomènes mis en jeu sont de même nature, mais beaucoup plus amplifiés. En effet, l'élévation de température semble s'être produite beaucoup plus rapidement, dû aux très mauvaises conditions de coupe. La vitesse de montée du couple jusqu'à $C^*_{Fz}$ semble témoigner d'une part d'un frettage beaucoup plus important entre le foret et le trou pour ce trou type que pour les deux autres, et d'autre part d'un très fort malaxage de matière entre la surface du trou et une quantité abondante de copeaux. Parfois, cette augmentation de température est visible par une diminution de l'effort jusqu'à $t^*_{Fz}$ (avant que le foret ne se dégrade), dû à une diminution de la limite d'élasticité du matériau usiné ;
- A $t^*_{Fz}$, le couple atteint une valeur $C^*_{Fz}$ au delà de laquelle la vitesse de montée du couple fluctue due à une mauvaise qualité de coupe ;
- Le couple chute moins brutalement entre $t_3$ et $t_4$, pour ce trou type que pour le trou type CCI+BMC. Cela témoigne d'un fort frottement des listels dans le trou et d'un refroidissement plus lent de l'ensemble outil/matière pouvant avoir des conséquences sur le cycle thermique subi par la pièce, et donc sur la ZATM.

Contrairement au trou type avec CCI et au trou type avec CCI+BMC, le 3ème trou type avec CCI+BMC+ZATM peut se détecter avec le couple et/ou l'effort axial, à partir de la plage de variation du rapport $[C_{max}/C_{palier}]_{CCI+BMC+ZATM} > [C_{max}/C_{palier}]_{CCI+BMC} > 1$, et un rapport $[Fz_{max}/Fz_{palier}]_{CCI+CCC+ZATM} > 1$.

## Détermination de la ZATM$_{max}$ à partir de l'analyse de l'effort axial

Conformément à une autre caractéristique de l'invention, on établit un critère de sévérité pour ce 3ème trou type en exprimant la valeur maximale de l'épaisseur de la ZATM en fonction des paramètres géométriques (Lp, D) et des conditions de coupe (Vc, f).

Cette épaisseur critique de ZATM est calculée par la formule suivante :

$$ZATM_{max} = B.\left(A'.V_c^{n-2}.L_p^{\,2}.D^2.f^{-2}\right)^{\alpha}$$

Les paramètres A', B, $\alpha$ et n sont des constantes intrinsèques à l'ensemble outil/matière qu'il convient de déterminer.

On décrit ci-après une démarche en 4 étapes permettant l'identification de ces 4 constantes A', B, $\alpha$ et n associées à l'ensemble outil/matière considéré.

**Etape 1 :** On trace le rapport $FZ_{max}/FZ_{palier}$ en fonction du temps de perçage tp mesuré ou calculé par la relation :

$$tp = \frac{60.\pi.Lp.D}{1000.Vc.f}$$

Le rapport $Fz_{max}/Fz_{palier}$ peut alors se mettre sous la forme suivante (figure 17) :

$$\frac{Fz_{max}}{Fz_{palier}} = E.tp$$

$$(1)$$

La pente E de la droite dépend directement de Vc par la relation :

$$E = A.60^{-n}.V_c^{\,n}.$$ 

$$(2)$$

**Etape 2** : On détermine les constantes A et n en traçant E en fonction de Vc en échelle logarithmique (figure 18) : ln

$$\ln E = n.\ln V_c + \ln\left(A.60^{-n}\right)$$

**Etape 3 :** On détermine les constantes B et $\alpha$ en traçant les valeurs expérimentales de la

$ZATM_{max}$ en fonction du produit $\dfrac{Fz_{max}}{Fz_{palier}}.tp$ et en les approximant par une loi puissance du type (figure 19):

$$ZATM_{max} = B.\left(\frac{Fz_{max}}{Fz_{palier}}.tp\right)^{\alpha}$$

$$(3)$$

**Etape 4** : On combine les relations (1), (2) et (3) afin d'exprimer le critère de sévérité basé sur l'épaisseur de la $ZATM_{max}$ en fonction des paramètres géométriques (Lp, D) et des paramètres de coupe (Vc, f).

$$ZATM_{max} = B.\left(A'.V_c^{\,n-2}.L_p^{\,2}.D^2.f^{-2}\right)^{\alpha} \quad \text{avec} \quad A' = A.\left(10^{-6}.60^{2-n}\pi^2\right)$$

**Détermination de la $ZATM_{max}$ à partir de l'analyse du couple**

En complément du critère de sévérité construit à partir du signal Fz, on détermine un autre critère à partir du couple. Celui-ci consiste à exprimer l'épaisseur de $ZATM_{max}$ mesurée en fonction de l'énergie maximale $Ec_{max}$ dissipée à la coupe déduite du couple max $C_{max}$, de Vc, de D et du temps de perçage tp calculé ou mesuré (figure 20) :

$$ZATM_{max} = F.\left(\frac{10^3.C_{max}.V_c}{30.D}.tp\right)^{\lambda} - G \quad \text{avec} \quad Ec_{max} = \frac{10^3.C_{max}.V_c}{30.D}.tp$$

et $\lambda$, F et G
étant trois constantes intrinsèques de l'ensemble outil/matière considéré.

**Analyse des aires**

Cette analyse consiste à calculer les aires sous les courbes Fz(t) et C(t) prenant ainsi en compte toute l'histoire du perçage d'un même trou ou d'une série de trous percés avec le même outil.

Elle s'applique en particulier dans les deux cas suivants :

- Lorsque les signaux Fz et C d'une anomalie quelle qu'elle soit sont différents de ceux relatés ci-avant (inobservation d'une valeur palier et/ou d'une valeur maximale) ;
- Lorsque les rapports $C_{max}/C_{palier}$ et/ou $Fz_{max}/Fz_{palier}$ sont les mêmes pour deux mêmes trous types alors que la sévérité de l'anomalie est différente ;
- Lorsque les signaux Fz et C présentent une augmentation d'amplitude sur plusieurs trous percés à conditions de perçage constantes ;

Ci-après, l'expression des aires à partir du signal Fz, qui est directement transposable au signal C :

- L'aire sous la courbe Fz(t) de $t_0$ à $t_4$ pour un Fz inférieur ou égal à $Fz_{palier}$ correspond à l'absence d'anomalie, soit

$$Aire_{Fzpalier} = \int_{t_0}^{t_4} \left( Fz(t) \leq Fz_{palier} \right) dt \quad ;$$

- L'aire sous la courbe Fz(t) pour un Fz compris entre $Fz_{max}$ et $Fz_{palier}$ traduit la présence d'anomalie(s), soit

$$Aire_{Fz\,max} = \int_{t_0}^{t_4} Fz(t)dt - Aire_{Fzpalier} \quad ;$$

- L'aire sous la courbe Fz(t) pour Nb=1 correspond à l'absence d'anomalie et d'usure d'outil, soit

$$Aire_{Fzmoy}(Nb = 1) = \int_{0}^{t_4} Fz_{Nb=1}(t)dt \ ;$$

- L'aire sous la courbe $Fz_{Nb}(t)$ correspond à une usure d'outil avec présence ou non d'anomalie(s) après un nombre Nb de trous percés, soit $Aire_{Fzmoy}(Nb) = \int_{0}^{t_4} Fz_{Nb}(t)dt$ .

On calcule ensuite d'une part les rapports d'aires $Aire_{FZmax}/Aire_{Fzpalier}$ et/ou $Aire_{Cmax}/Aire_{Cpalier}$ pour quantifier la sévérité de l'anomalie lors d'un perçage d'un trou et d'autre part les rapports d'aires $AireFz_{moy}(Nb)/AireFz_{moy}(Nb=1)$ et/ou $Aire_{Cmoy}(Nb)/Aire_{Cmoy}(Nb=1)$ pour quantifier la sévérité de l'anomalie lors d'un perçage d'une série de trous.

**Effet de l'usure en Vb du foret sur la détection d'une anomalie type**

A partir du PM on a établi un critère de détection d'une anomalie type, à la suite d'une usure en dépouille du foret et ce à défaut de ne pouvoir la détecter par la forme des signaux.

Pour des conditions de coupe (Vc,f) du domaine « absence d'anomalie » défini pour un outil neuf par trou (Nb=1, Vb≈0), l'influence de l'usure frontale du foret sur l'apparition d'une anomalie type, est prise en compte en suivant la démarche suivante à partir du signal Fz(t), mais qui peut également être appliquée au signal C(t) :

**Etape 1 :**

- On trace l'usure en Vb du foret en fonction du nombre de trous percés Nb pour des conditions de coupe AL du domaine « absence d'anomalie », en particulier pour la condition COM et une condition Hors COM (figure 21).
- On déduit, de la courbe précédente, le nombre critique de trous $Nb_{crit.}$ correspondant au critère de réforme du foret ($Vb_{crit.}$=0,3mm), pour chaque condition de coupe (Vc,f) étudiée. La valeur $Nb_{crit.}$ d'une condition de coupe donnée traduit alors la durée de vie du foret.

- On détermine la constante p en traçant les valeurs de Vb/Vbcrit. en fonction de celles de Nb/Nbcrit., et en les approximant suivant une loi puissance du type (figure 22) :

$$\frac{Vb}{Vb_{crit.}} = \left(\frac{Nb}{Nb_{crit.}}\right)^{p} .$$

**Etape 2 :**

- On détecte à partir d'examens destructifs l'anomalie type considérée et on en déduit le Vb correspondant noté Vb*. La relation Vb en fonction de Nb, permet d'associer à un nombre de trous percés Nb* une usure d'outil Vb*, correspondant à l'apparition de la toute première anomalie considérée.
- On trace pour chacune des conditions de coupe étudiées la courbe maîtresse Vb*/Vb$_{crit.}$ en fonction de Nb*/Nb$_{crit.}$ (figure 23).

**Etape 3 :**

- On relève après chaque trou percé Fz$_{moy}$ à l'entrée des arêtes de coupe dans la matière (figure 24), et éventuellement les aires des signaux déduits du PM. L'augmentation de Fz$_{moy}$ en fonction de Nb rend compte d'une mauvaise qualité de coupe, caractéristique d'une usure frontale croissante du foret. En revanche, la diminution de Fz$_{moy}$ entre $t_1$ et $t_2$ traduit un échauffement conséquent entre le foret et la matière favorable à du collage de copeaux et notamment pour la condition Hors COM.

**Etape 4 :**

- On détermine le paramètre q en traçant les valeurs de Fz$_{moy}$(Nb)/Fz$_{moy}$(Nb=1) en fonction de Nb pour les différentes conditions de coupe étudiées, et en les approximant par une loi puissance du type (figure 25) :

$$\frac{Fz_{moy}(Nb)}{Fz_{moy}(Nb=1)} = Nb^{q} .$$

- D'après la relation donnée en étape 1, le nombre de trou Nb peut s'exprimer sous la forme :

$$Nb = Nb_{crit.}\left(\frac{Vb}{Vb_{crit.}}\right)^{1/p}$$ . Par conséquent, pour un ensemble Outil/Matière donné, Fz$_{moy}$(Nb)/Fz$_{moy}$(Nb=1) en fonction de l'usure normalisée Vb/Vb$_{crit.}$ s'exprime par la relation suivante :

$$\frac{Fz_{moy}(Nb)}{Fz_{moy}(Nb=1)} = Nb_{crit.}^{q}\left(\frac{Vb}{Vb_{crit.}}\right)^{q/p} .$$

- On reporte, sur les courbes précédentes (figure 26), le Vb*/Vb$_{crit.}$ correspondant à l'apparition de l'anomalie considérée pour chaque condition de coupe étudiée, et on en détermine Fz*$_{moy}$(Nb*)/Fz$_{moy}$(Nb= 1) qui constitue le critère de détection recherché. Il apparaît que ce critère est indépendant des conditions de coupe, et à ce titre, peut être considéré comme intrinsèque à l'ensemble outil/matière étudié.

En conséquence, toute signature PM d'un trou percé avec un outil usé en Vb, pour lequel Fz$_{moy}$(Nb)/Fz$_{moy}$(Nb=1) > Fz*$_{moy}$(Nb*)/Fz$_{moy}$(Nb=1) indique la présence de l'anomalie considérée.

Une même démarche peut être entreprise avec l'analyse des aires (voir paragraphe précédent) pour définir un critère de détection d'une anomalie type, à la suite d'une usure en dépouille du foret. Dans ce cas, l'aire de l'anomalie considérée est rapportée à celle correspondant à l'absence d'anomalie définie par le premier trou.

**Exemple d'analyse des signaux Fz et C pour le couple outil WC-Co revêtu / matière Inconel 718 TR**

La démarche proposée ci-dessus a été suivie pour l'ensemble outil WC-Co revêtu / matière Inconel 718TR, dans le but de définir les critères de sévérité des anomalies engendrées pendant le perçage.

Une matrice d'essai et une configuration de perçage ont été définies à savoir :

- Trou droit et débouchant avec une descente continue du foret (c'est-à-dire sans cycle de débourrage pendant l'opération de perçage) de 15mm quelque soit la longueur percée ;
- Perçage avec et sans lubrification ;
- Lubrification externe par le mandrin (pression 6 bars, débit 221/min). Le lubrifiant est constitué d'un mélange eau/ huile soluble à 6% en volume ;
- Outil monobloc en carbure cémenté WC-Co de chez Sandvik du type [R415.5-0700-50-8C1] comprenant deux arêtes de coupe, deux trous de lubrification interne, un revêtement TiAlN, un angle $\delta$ au sommet du foret de 140˚ ;
- Maintien du foret dans le porte-outil au moyen d'une pince de précision $ER\phi7-8$;
- Matière Inconel 718 TR, avec une taille de grain ASTM 10, un traitement thermique trempé - double revenu 720˚C/ 620˚C, et une macrodureté HRC43 ;
- Liaison entre porte-outil et la broche assurée par un cône HSK63 de Kennametal-Hertel ;
- Une machine outil Huron KX10 équipée d'une table Kistler de mesure d'efforts tridimensionnels (Fx, Fy, Fz) ;
- Diamètre du forêt : de 5 à 10mm ;
- Longueur percée : de 2,1 à 12mm ;
- Vitesse de coupe de 3 à 100m/min ;
- Avance par tour de 0,01 à 0,15mm/tour ;
- Au moins 2 trous sont percés par condition de coupe avec un outil neuf par trou.

Les signaux Fz et C (figures 27, 28, 29 et 30) ont été enregistrés grâce à la chaîne d'acquisition présentée au-dessus. Les trois types d'anomalies sont ici rencontrés pour l'ensemble outil/matière considéré. Les signatures PM de chacune de ces anomalies sont en parfait accord avec celles données précédemment.

*Le trou type sans anomalie*

Pour l'ensemble outil/matière considéré et un rapport Lp/D=8,5/7 , les conditions optimales de perçage AL déterminées à partir de la norme AFNOR NF E 66-520-8 sont : Vc=8m/min, f=0,08mm/tour. Ces conditions de perçage se caractérisent par (figure 27) :

- Un régime stationnaire en Fz ($Fz_{palier}$ = 1800 N) ;
- Un régime stationnaire en C ($C_{palier}$ = 3,6 N.m) ;
- Les rapports $C_{max}/C_{palier}$ et $Fz_{max}/Fz_{palier}$ égaux à 1.

*Le trou type avec l'anomalie CCI (figure 28)*

Contrairement au cas précédent, le perçage s'effectue sans lubrification et se caractérise par une légère diminution de ~5% de $Fz_{palier}$ entre $t_1$ et $t_2$. Le rapport $C_{max}/C_{palier}$ varie de 1,2 à 2,5.

*Le trou type avec une combinaison d'anomalies CCI+BMC (figure 29)*

Il se caractérise par un rapport $C_{max}/C_{palier}$ compris entre 2,5 et 5, et s'observe aussi bien pour un perçage AL qu'un perçage SL.

*Le trou type avec une combinaison d'anomalies CCI+BMC+ZATM (figure 30)*

Ce trou type se caractérise par un rapport $C_{max}/C_{palier}$>5 pour un perçage SL, et un rapport $Fz_{max}/Fz_{palier}$ bien supérieur à 1, contrairement aux deux trous types précédents où $Fz_{max}/Fz_{palier}$ était égal à 1. Ce rapport des efforts axiaux rend compte de la dégradation du foret. Pour Lp/D≥1,2 il est observé une ZATM triangulaire et pour Lp/D≤ 1,2 il est observé une ZATM rectangulaire.

*Critère de'sévérité de la ZA TM à partir de Fz (figures 31, 32 et 33)*

La démarche en 4 étapes consistant à déterminer la formule donnant la $ZATM_{max}$ en fonction des paramètres de coupe et des paramètres géométriques, a été suivie. Les constantes n, $\alpha$, A, A' et B intrinsèques à l'ensemble outil WC-Co revêtu / matière Inconel 718TR sont les suivantes :

$$
\begin{aligned}
n &= 2,65 \\
\alpha &= 0,46 \\
A &= 0,21 \quad s^{1,65}.m^{-2,65} \\
A' &= 1,46.10^{-7} \quad s^{1,65}m^{-2,65} \\
B &= 320 \quad \mu m.s^{-0,46}
\end{aligned}
$$

*Critère de sévérité de la ZATM à partir du couple (figure 34)*

Pour différentes conditions de coupe et différentes géométries de trous, l'épaisseur de $ZATM_{max}$ est calculée par la démarche citée ci-avant. Les constantes F, $\lambda$ et G intrinsèques à l'ensemble outil WC-Co revêtu / matière Inconel 718TR sont les suivantes :

$$
\begin{aligned}
F &= 12,7 \quad \mu m.J^{-0,53} \\
G &= 365 \quad \mu m \\
\lambda &= 0,53
\end{aligned}
$$

*Critère de détection d'une anomalie de type CCI+BMC à la suite de l'usure d'outil en Vb (figures 35 à 43)*

Les analyses destructives des trous ont montré la génération des deux anomalies types CCI et BMC avec l'usure du foret en Vb dans des conditions de coupe AL jugées peu sévères ($Vc \leq Vc_{crit.}$). D'après des essais de durée de vie en fatigue, la combinaison d'anomalies de type CCI+BMC s'est avérée être plus critique que l'anomalie de type CCI uniquement.
Par conséquent, la démarche en 4 étapes consistant à établir le critère de détection de l'anomalie de type CCI+BMC, suite à une usure en dépouille du foret, a été suivie avec les deux conditions de coupe suivantes :

| | | | |
|---|---|---|---|
| COM : | Avec lubrification | Vc=8m/min | f=0,08mm/tour |
| Hors COM : | Avec lubrification | Vc=15m/min | f=0,02mm/tour |

Les paramètres caractéristiques de cette démarche sont :

| **COM** | | **Hors COM** | |
|---|---|---|---|
| $Nb_{crit.}$ | = 200 | $Nb_{crit.}$ | = 90 |
| Nb* | = 80 | Nb* | = 10 |
| p = | = 0,675 | p | = 0,552 |
| *D'après les signaux Fz(t) :* | | | |
| $Fz_{moy}(Nb=1)$ | = 1800 N | $Fz_{moy}(Nb=1)$ | = 1020 N |
| q | = 0,046 | q | = 0,139 |
| *D'après les signaux C(t) :* | | | |
| $C_{moy}(Nb=1)$ | = 3,6 N.m | $C_{moy}(Nb=1)$ | = 1,4 N.m |
| q | = 0,058 | q | = 0,136 |

Les critères de détection de la combinaison d'anomalies de type CCI+BMC considérée suite à une usure en Vb , intrinsèque à l'ensemble outil WC-Co revêtu/matière Inconel 718 TR, et indépendant des conditions de coupe choisies, sont :

- $Fz^*_{moy}(Nb^*)/Fz_{moy}(Nb=1) = 1,25$ soit un surcroît de 25% de l'effort axial moyen comparé à celui mesuré au premier trou à partir d'un outil neuf ;

- C*$_{moy}$(Nb*)/C$_{moy}$(Nb=1) = 1,23 soit un surcroît de 23% du couple moyen comparé à celui mesuré au premier trou à partir d'un outil neuf.

On a repris ci-après la définition de l'ensemble des symboles cités dans la présente demande, ainsi que les relations mathématiques qui permettent de calculer leurs valeurs.

| Symboles | Dénomination | Relations | Unités |
|---|---|---|---|
| $\alpha$ | Constante intrinsèque au couple outil/matière, intervenant dans le critère de sévérité défini par l'épaisseur de ZATM$_{max}$ à partir de l'effort Fz | - | - |
| $\delta$ | Angle de pointe ou angle au sommet du foret | - | o |
| $\lambda$ | Constante intrinsèque au couple outil/matière, intervenant dans le critère de sévérité défini par l'épaisseur de ZATM$_{max}$ à partir du couple | - | - |
| $\omega$ | Vitesse angulaire | $\dfrac{\pi.N}{30}$ | rd.s$^{-1}$ |
| $\beta'$ | Angle des rayures laissées par le foret (becs, listels) par rapport à un axe perpendiculaire au trou lors de la remontée du foret | Arctan (-Vr/Vc) | o |
| A | Constante intrinsèque au couple outil/matière, intervenant dans le critère de sévérité défini par l'épaisseur de ZATM$_{max}$ à partir de l'effort Fz | $60^n.E.Vc^{-n}$ | s$^{n-1}$.m$^{-n}$ |
| A' | Constante intrinsèque au couple outil/matière, intervenant dans le critère de sévérité défini par l'épaisseur de ZATM$_{max}$ à partir de l'effort Fz | $A.(10^{-6}.60^{2-n}.\pi^2)$ | s$^{n-1}$.m$^{-n}$ |
| AireFz$_{max}$ AireC$_{max}$ | Aire sous les courbes Fz(t) ou C(t) ayant pour borne inférieure Fz$_{palier}$ ou C$_{palier}$ et pour borne supérieure Fz$_{max}$ ou C$_{max}$ correspondant à la présence d'anomalies | $\int_0^4 Fz(t)dt - Aire_{Fz\,palier}$ | N.s , N.m.s |
| AireFZ$_{palier}$ AireC$_{palier}$ | Aire sous les courbes Fz(t) ou C(t) ayant pour borne supérieure Fz$_{palier}$ ou C$_{palier}$ correspondant à l'absence d'anomalie | $\int_0^4 \left(Fz(t) \le Fz_{palier}\right)dt$ | N.s , N.m.s |
| AireFz$_{moy}$(Nb) AireC$_{moy}$(Nb) | Aire sous les courbes Fz(t) ou C(t) après un nombre Nb de trous percés, correspondant à une usure d'outil avec présence ou non d'anomalie(s) | $\int_0^4 Fz_{Nb}(t)dt$ | N.s , N.m.s |

(suite)

| Symboles | Dénomination | Relations | Unités |
|---|---|---|---|
| AireFz$_{moy}$(Nb=1)<br>Aire$_{Cmoy}$(Nb=1) | Aire sous les courbes Fz(t) ou C(t) correspondant à l'absence d'anomalie et d'usure d'outil | $\int_{0}^{4} Fz_{Nb=1}(t)dt$ | N.s , N.m.s |
| AL | Perçage Avec Lubrification | - | - |
| B | Constante intrinsèque au couple outil/matière, intervenant dans le critère de sévérité défini par l'épaisseur de ZATM$_{max}$ à partir de l'effort Fz | - | $\mu$m.s$^{-\alpha}$ |
| BDP ou DP | Bande de Déformation Plastique | - | - |
| BMC ou MC | Bande de Matière Cisaillée | - | - |
| C | Couple engendré par le foret sur la pièce pendant la phase de perçage (combinaison linéaire des efforts transversaux Fx et Fy) | En un point M de la table de mesure d'efforts, défini par ses coordonnées x et y : C = C$_0$ + x.Fy - y.Fx où C$_0$ est la valeur du couple au point x=0 et y=0 | N.m |
| C$^*_{FZ}$ | Couple correspondant au temps t*$_{Fz}$ de montée d'effort | - | N.m |
| C*$_{moy}$ (Nb*) | C$_{moy}$ pour une usure Vb* correspondant à l'apparition de l'anomalie considérée | - | N.m |
| CCI ou CI | Collage de Copeaux Isolés | - | - |
| C$_{max}$ | Couple maximum | - | N.m |
| C$_{moy}$ | Couple moyen à l'entrée des arêtes de coupe dans la matière | - | N.m |
| C$_{moy (Nb)}$ | C$_{moy}$ correspondant à une usure Vb donnée | - | N.m |
| C$_{moy (Nb=1)}$ | C$_{moy}$ correspondant au premier trou percé (Nb=1) réalisé à partir d'un outil neuf | - | N.m |
| CND | Contrôle Non Destructif | - | - |
| COM | Couple Outil-Matière | - | - |
| C$_{palier}$ | Couple stationnaire | - | N.m |
| D | Diamètre du foret | - | mm |
| E | Pente de la droite Fz$_{max}$/Fz$_{palier}$ en fonction de tp | $A.60^{-n}.V^n_c$ | s$^{-1}$ |
| Ec$_{max}$ | Energie maximale de coupe | $\dfrac{10^3.C_{max}.V_c}{30.D}.tp$ | J |
| F | Constante intrinsèque au couple outil/matière, intervenant dans le critère de sévérité défini par l'épaisseur de ZATM$_{max}$ à partir du couple | - | $\mu$m.J$^{-\lambda}$ |
| f | Avance par tour | - | mm/tour |

(suite)

| Symboles | Dénomination | Relations | Unités |
|---|---|---|---|
| Fx et Fy | Efforts transversaux engendrés en un point de l'arête par la matière | - | N |
| Fz | Effort axial ou de pénétration du foret dans la matière | - | N |
| Fz*$_{moy\ (Nb*)}$ | C$_{moy}$ pour une usure Vb* correspondant à l'apparition de l'anomalie considérée | - | N |
| Fz$_{max}$ | Effort axial maximum | - | N |
| Fz$_{moy}$ | Effort axial moyen à l'entrée des arêtes de coupe dans la matière | - | N |
| Fz$_{moy}$ (Nb) | Fz$_{moy}$ correspondant à une usure Vb donnée | - | N |
| Fz$_{moy}$ (Nb=1) | Fz$_{moy}$ correspondant au premier trou percé (Nb=1) réalisé à partir d'un outil neuf | - | N |
| Fz$_{palier}$ | Effort axial stationnaire | - | N |
| G | Constante intrinsèque au couple outil/matière, intervenant dans le critère de sévérité défini par l'épaisseur de ZATM$_{max}$ à partir du couple | - | $\mu$m |
| hpointe | Hauteur de pointe d'outil | $\dfrac{D}{2}.\cot an\dfrac{\delta}{2}$ | mm |
| Kca | Effort spécifique de coupe associé à l'effort axial | $\dfrac{2.Fz}{f.D}$ | N/mm$^2$ |
| Kct | Effort spécifique de coupe associé au couple | $\dfrac{8000.C}{f.D^2}$ | N/mm$^2$ |
| Lb | Longueur de bavure en sortie de trou | $\dfrac{10^3.V_c.f}{60\,\pi\,D}.\left(\dot{t}_{Fz=0}-\dot{t}_3\right)$ | mm |
| Ld | Longueur de débourrage | - | mm |
| Lp | Longueur percée | - | mm |
| Lt | Longueur totale de descente d'outil | - | mm |
| MEB | Microscope Electronique à Balayage | - | - |
| MO | Microscope Optique | - | - |
| n | Constante intrinsèque au couple outil/matière, intervenant dans le critère de sévérité défini par l'épaisseur de ZATM$_{max}$ à partir de l'effort Fz | - | - |
| N | Vitesse de rotation de la broche | $\dfrac{10^3.Vc}{\pi.D}$ | tours/min |

(suite)

| Symboles | Dénomination | Relations | Unités |
|---|---|---|---|
| Nb | Nombre de trous percés avec le même outil | - | - |
| Nb* | Nombre de trous percés avec le même outil correspondant à l'apparition de l'anomalie considérée | - | - |
| Nb$_{crit.}$ | Nombre critique de trous percés correspondant à Vb=0,3mm (réforme du foret) | - | - |
| p | Constante dépendante d'une condition de coupe et intervenant dans le critère de détection d'anomalie lié à l'usure Vb | - | - |
| Pc$_{max}$ | Puissance maximale dissipée à la coupe | $\dfrac{10^3.C_{max}.V_c}{30.D}$ | W ou J.s$^{-1}$ |
| PM | Process Monitoring | - | - |
| q | Constante dépendante d'une condition de coupe, déduite à partir de Fz(t) ou de C(t) et intervenant dans le critère de détection d'anomalie lié à l'usure Vb | - | - |
| R=Lp/D | Ratio = longueur percée / diamètre | - | - |
| SL | Perçage Sans Lubrification | - | - |
| t | Temps effectif de coupe pour un même outil et plusieurs trous percés | Nb.tp | s |
| t* | Temps effectif de coupe pour un même outil correspondant à l'apparition de l'anomalie considérée | Nb*.tp | s |
| t*$_3$ | Temps expérimental à partir duquel les arêtes de coupe (becs du foret) sortent de la matière | - | s |
| t*$_{Fz}$ | Temps transitoire entre le régime stationnaire et la montée de l'effort | - | s |
| t*$_{Fz=0}$ | Temps au bout duquel l'effort revient à zéro un peu avant la remontée du foret | - | s |
| t$_0$ | Temps théorique à partir duquel la pointe du foret pénètre la matière | - | s |
| t$_1$ | Temps théorique à partir duquel les arêtes de coupe (becs du foret) pénètrent la matière | - | s |
| t$_2$ | Temps théorique à partir duquel la pointe du foret sort de la matière | - | s |

(suite)

| Symboles | Dénomination | Relations | Unités |
|---|---|---|---|
| $t_3$ | Temps théorique à partir duquel les arêtes de coupe (becs du foret) sortent de la matière | - | s |
| $t_4$ | Temps juste avant que le foret remonte | - | s |
| $t_e^{\,*}$ | Temps transitoire entre le régime stationnaire et la montée du couple | - | s |
| $t_{crit.}$ | Temps critique de coupe correspondant à Vb=0,3mm (réforme du foret) | $Nb_{crit.} \cdot tp$ | s |
| td | Temps de débourrage du foret | $\dfrac{60.\pi.Ld.D}{10^3.V_c.f}$ | s |
| tp | Temps de perçage | $\dfrac{60.\pi.Lp.D}{10^3.V_c.f}$ | s |
| tt | Temps total de descente d'outil | $\dfrac{60.\pi.Lt.D}{10^3.V_c.f}$ | s |
| Vb | Usure frontale des arêtes de coupe | - | mm |
| Vb* | Usure des arêtes de coupe correspondant à l'apparition de l'anomalie considérée | - | mm |
| $Vb_{crit.}$ | Usure frontale critique de réforme du foret évaluée à 0,3mm | - | mm |
| Vc | Vitesse de coupe | $\dfrac{\pi.D.N}{10^3}$ | m/min |
| $Vc_{crit.}$ | Vitesse de coupe critique séparant le domaine « sans anomalie » de celui « avec anomalies » | - | m/min |
| Vf | Avance par minute ou vitesse d'avance | $N.f$ | mm/min |
| Vr | Vitesse axiale de remontée du foret | - | m/min |
| ZATM | Zone Affectée Thermo-Mécaniquement | - | - |
| $ZATM_{max}$ | Epaisseur maximale de la Zone Affectée Thermo-Mécaniquement en sortie de trou | $B.\left(A'.V_c^{n-2}.L_p^{\,2}.D^2.f^{-2}\right)^{\alpha}$ ou $F.\left(\dfrac{10^3.C_{max}.V_c}{30.D}\,tp\right)^{\lambda} - G$ | $\mu$m |
| ZATMr | ZATM rectangulaire | - | - |
| ZATMt | ZATM triangulaire | - | - |
| ZR | Zone Recristallisée | - | - |

**Revendications**

1. Procédé de détection et éventuellement de quantification d'anomalies de perçage dans une pièce métallique (4), telles que Collage de Copeaux Isolés, CCI, Bande de Matière Cisaillée, BMC, ou de Zone Affectée Thermo-Mécaniquement, ZATM, le perçage étant réalisé par un foret (10), **caractérisé par le fait qu'**il consiste à déterminer d'une part, à partir de signaux fournis par des capteurs représentatifs des efforts du foret sur la pièce, un ensemble de valeurs des deux paramètres suivants, en fonction du temps à savoir l'effort axial de pénétration du foret (10) dans la pièce métallique (4) Fz(t) et le couple C(t), engendrés pendant au moins une partie de l'opération de perçage entre le temps ta de l'entrée de la pointe (11) du foret et le temps t4 de la fin du débourrage, puis d'en isoler les valeurs $Fz_{palier}$ et $C_{palier}$ correspondant à un palier et représentatives de l'absence d'anomalie, les valeurs $Fz_{max}$ et $C_{max}$ correspondant aux valeurs maximales et représentatives de la présence d'une anomalie, et d'en déterminer ensuite les rapports $Fz_{max}/Fz_{palier}$ et/ou $C_{max}/C_{palier}$, et/ou éventuellement le rapport des aires $Aire_{Fzmax}/Aire_{Fzpalier}$ et/ou $Aire_{Cmax}/Aire_{Cpalier}$ qui sont les aires sous les courbes Fz(t) ou C(t) ayant pour borne inférieure $Fz_{palier}$ ou $C_{palier}$ et pour borne supérieure $Fz_{max}$ ou $C_{max}$ rapportées aux aires sous les courbes Fz(t) ou C(t) ayant pour borne supérieure $Fz_{palier}$ ou $C_{palier}$, de manière à rendre compte du type d'anomalies et éventuellement de sa sévérité, une anomalie de type CCI étant déterminée à partir de la plage de variation du rapport $[C_{max}/C_{palier}]_{CCI}> 1$ et un rapport $[Fz_{max}/Fz_{palier}]_{CCI}=1$, une anomalie de type combiné CCI et BMC étant déterminée à partir de la plage de variation du rapport $[C_{max}/C_{palier}]_{CCI+BMC}>[C_{max}/C_{palier}]_{CCI}>1$, et un rapport $[Fz_{max}/Fz_{palier}]_{CCI+BMC}=1$ et une anomalie de type combiné CCI, BMC et ZATM étant déterminée à partir de la plage de variation du rapport $[C_{max}/C_{palier}]_{CCI+BMC+ZATM}>[C_{max}/C_{palier}]_{CCI+BMC}>1$ et un rapport $[Fz_{max}/Fz_{palier}]_{CCI+BMC+ZATM}>1$.

2. Procédé selon la revendication 1 consistant également à isoler les valeurs $Fz_{moy}(Nb)$ et $C_{moy}(Nb)$ en fonction du nombre de trous percés et correspondant aux valeurs moyennes des signaux à l'entrée des arêtes de coupe dans la matière, et à déterminer ensuite les rapports $Fz_{moy}(Nb)/Fz_{moy}(Nb=1)$ et/ou $C_{moy}(Nb)/C_{moy}(Nb=1)$ et/ou éventuellement le rapport des aires $Aire_{Fzmoy}(Nb)/Aire_{Fzmoy}(Nb=1)$, et/ou $Aire_{Cmoy}(Nb)/Aire_{Cmoy}(Nb=1)$, et à isoler également un ensemble de valeurs liées à l'usure en dépouille Vb du foret tel que $Nb_{crit.}$ correspondant au nombre critique de trous percés selon lequel Vb=0,3mm (réforme du foret), Vb* et Nb* correspondant à la première apparition de l'anomalie considérée, de manière à rendre compte de l'apparition d'une anomalie liée à l'usure.

3. Procédé, selon la revendication 1, selon lequel on trace le rapport $Fz_{max}/Fz_{palier}$ en fonction du temps de perçage tp mesuré ou calculé, et dont la pente E se met sous la forme $E = A.60^{-n}.V_c^{n}$ .

4. Procédé, selon la revendication 3, selon lequel on détermine les constantes A et n en traçant la pente E de la droite précédente $\dfrac{Fz_{max}}{Fz_{palier}} = E.tp$ en fonction de Vc en échelle logarithmique, à savoir $\ln E = n.\ln V_c + \ln(A.60^{-n})$.

5. Procédé, selon la revendication 4, selon lequel on détermine les constantes B et $\alpha$ en traçant les valeurs expérimentales de la $ZATM_{max}$ en fonction du produit $\dfrac{Fz_{max}}{Fz_{palier}}.tp$, lesquelles se mettent sous la forme :

$$ZATM_{max} = B.\left(\dfrac{Fz_{max}}{Fz_{palier}}.tp\right)^{\alpha}.$$

6. Procédé, selon les revendications 4 et 5, selon lequel on détermine un critère de sévérité basé sur l'épaisseur de la $ZATM_{max}$ en fonction des paramètres géométriques (Lp, D) et des paramètres de coupe (Vc, f) lequel se met sous la forme :

 a.

$$ZATM_{max} = B.\left(A'.V_c^{n-2}.L_p^{2}.D^{2}.f^{-2}\right)^{\alpha}$$

b. avec $A' = A.(10^{-6}.60^{2-n}\pi^2)$, et les constantes A, $\alpha$, B et n étant intrinsèques à l'ensemble outil/matière.

7. Procédé, selon les revendications 1, et 4 à 5, selon lequel on détermine les quatre constantes A, $\alpha$, B et n intrinsèques à l'ensemble outil/matière considéré par la démarche en quatre étapes.

8. Procédé, selon la revendication 1, selon lequel on détermine un critère de sévérité à partir du couple, qui consiste à exprimer les valeurs expérimentales de la $ZATM_{max}$ en fonction de l'énergie maximale $Ec_{max}$ dissipée à la coupe déduite du couple max $C_{max}$, de Vc, de D et du temps de perçage tp calculé ou mesuré, lesquelles se mettent sous la forme :

   a.

$$ZATM_{max} = F.\left(\frac{10^3.C_{max}.V_c}{30.D}.tp\right)^\lambda - G$$

   b. avec $Ec_{max} = \dfrac{10^3.C_{max}.V_c}{30.D}.tp$ , et les constantes $\lambda$, F et G étant intrinsèques à l'ensemble outil/matière considéré.

9. Procédé, selon la revendication 1, selon lequel on calcule les aires sous les courbes Fz(t) et C(t), lorsque les signaux Fz et C d'une anomalie quelle qu'elle soit ne présentent pas de valeur palier et/ou de valeur maximale, et lorsque les rapports $C_{max}/C_{palier}$ et/ou $Fz_{max}/Fz_{palier}$ sont les mêmes pour deux mêmes trous types présentant des sévérités d'anomalies différentes.

10. Procédé, selon la revendication 9, selon lequel on calcule les rapports d'aires $Airer_{Fzmax}/Aire_{Fzpalier}$ et/ou $Aire_{Cmax}/Aire_{Cpalier}$ pour quantifier la sévérité de l'anomalie.

11. Procédé, selon la revendication 2, selon lequel on détecte l'anomalie de type CCI+BMC liée à l'usure en Vb du foret dans le cas du perçage avec lubrification, selon lequel on détermine le paramètre p en traçant les valeurs de Vb/Vbcrit. en fonction des valeurs de Nb/Nbcrit., et en les approximant suivant une loi puissance du type :

$$\frac{Vb}{Vb_{crit.}} = \left(\frac{Nb}{Nb_{crit.}}\right)^p .$$

12. Procédé, selon la revendication 11, selon lequel on trace pour chacune des conditions de coupe étudiées la courbe maîtresse Vb\*/Vb$_{crit.}$ en fonction de Nb\*/Nb$_{crit}$.

13. Procédé, selon la revendication 2, selon lequel on détermine le paramètre q en traçant les valeurs de $Fz_{moy}$(Nb) /$Fz_{moy}$(Nb=1) en fonction de Nb pour les différentes conditions de coupe étudiées, et en les approximant par une loi puissance du type :

$$\frac{Fz_{moy}(Nb)}{Fz_{moy}(Nb=1)} = Nb^q .$$

14. Procédé, selon les revendications 2, 11 et 12, selon lequel on exprime, pour un ensemble Outil/Matière donné, $Fz_{moy}$(Nb)/$Fz_{moy}$(Nb=1) en fonction de l'usure normalisée Vb/Vb$_{crit.}$ par la relation suivante :

$$\frac{Fz_{moy}(Nb)}{Fz_{moy}(Nb=1)} = Nb_{crit.}^q \left(\frac{Vb}{Vb_{crit.}}\right)^{q/p} .$$

15. Procédé, selon les revendications 11 et 14, selon lequel on reporte, sur la courbe d'équation

EP 1 882 547 B1

$$\frac{Fz_{moy}(Nb)}{Fz_{moy}(Nb=1)} = Nb_{crit.}^{q} \cdot \left(\frac{Vb}{Vb_{crit.}}\right)^{q/p}$$ pour chaque condition de coupe, les valeurs de Vb*/Vb$_{crit.}$ correspondant à l'apparition de l'anomalie considérée de type CCI+BMC, et on en détermine Fz*$_{moy}$(Nb*)/Fz$_{moy}$(Nb=1) qui constitue le critère de détection de l'anomalie de type CCI+BMC, indépendant des conditions de coupe et intrinsèque à l'ensemble outil/matière considéré, et pour lequel Fz$_{moy}$(Nb)/Fz$_{moy}$(Nb=1) > Fz*$_{moy}$(Nb*)/Fz$_{moy}$(Nb=1) indique la présence de l'anomalie considérée.

16. Procédé, selon la revendication 2, selon lequel on utilise l'analyse des aires pour définir un critère de détection d'une anomalie type, à la suite d'une usure en dépouille du foret, où l'aire de l'anomalie considérée est rapportée à celle correspondant à l'absence d'anomalie définie par le premier trou.

**Claims**

1. A method for detecting and optionally quantifying drilling anomalies in a metal part (4), such as Isolated Clips Bonding, ICB, Band Material Sheared, BMS, or Thermo-Mechanically Affected Zone, TMAZ, the drilling operation being performed by a drill bit (10), **characterized in that** it consists in determining on the one hand from signals given by sensors representative of the drill bit efforts on the part, a value set of the two following parameters, depending on the time, i.e., the penetration axial stress of the drill bit (10) into the metal part (4) Fz(t) and the torque C(t), generated during at least one part of the drilling operation between the time t0 of entry of the tip (11) of the drill bit and the time t4 of the end of the degating, followed by isolating the Fz$_{threshold}$ and C$_{threshold}$ values corresponding to a threshold and representative of the absence of any anomaly, the Fz$_{max}$ and C$_{max}$ values corresponding to the maximum values and being representative of the presence of a anomaly, and then determining the Fz$_{max}$/Fz$_{threshold}$ and C$_{max}$/C$_{threshold}$ ratios and/or optionally the Area$_{Fzmax}$/Area$_{Fzthreshold}$ and/or Area$_{Cmax}$/Area$_{Cthreshold}$ area ratios that are the areas under the Fz(t) or C(t) curves having as a lower boundary Fz$_{threshold}$ or C$_{threshold}$ and as a higher boundary Fz$_{max}$ or C$_{max}$ related to the areas under the Fz(t) or C(t) curves having as a higher boundary Fz$_{threshold}$ or C$_{threshold}$, so as to indicate the anomaly type and optionally its severity, an anomaly of the ICB type being determined through the range of variation of the [C$_{max}$/C$_{threshold}$]$_{ICB}$ratio > 1, and a [Fzmax/Fzthreshold]$_{ICB}$ ratio = 1, an anomaly of the conbined ICT and BMS type being determined through the range of variation Of the [C$_{max}$/C$_{threshold}$]$_{ICT+BMC}$ratio>[C$_{max}$/C$_{threshold}$]$_{ICB}$ ratio > 1, and a [Fz$_{max}$/Fz$_{threshold}$]$_{ICT+BMC}$ratio=1 and an anomaly of the combined ICB, BMS and TMAZ type being determined through the range of variation of the [C$_{max}$/C$_{threshold}$]$_{ICB+BMS+TMAZ}$ ratio > [C$_{max}$/C$_{threshold}$]$_{ICB+BMS}$ ratio > 1 and a [Fz$_{max}$/Fz$_{threshold}$]$_{ICB+BMS+TMAZ}$ ratio > 1.

2. A method according to claim 1 further comprising isolating the values Fz$_{moy}$(Nb) and C$_{moy}$(Nb) as a function of the number of bores being drilled and corresponding to the mean values of signals at the inlet of cutting edges in the material and followed by determining the Fz$_{moy}$(Nb)/Fz$_{moy}$(Nb=1) and/or C$_{moy}$(Nb)/C$_{moy}$(Nb=1) ratios, and/or optionally the Area$_{Fzmoy}$(Nb)/Area$_{Fzmoy}$(Nb=1) and/or Area$_{Cmoy}$(Nb)/Area$_{Cmoy}$(Nb=1) area ratios, and further isolating a set of values associated to the rake wear Vb of the drill bit such as Nb$_{crit.}$ corresponding to the critical number of bores being drilled according to which Vb=0.3mm (rejection of the drill bit), Vb* and Nb* corresponding to the first occurrence of the anomaly under consideration, so as to indicate the occurrence of a anomaly associated to wear.

3. A method according to claim 1, wherein the Fz$_{max}$/Fz$_{threshold}$ ratio is plotted as a function of the measured or calculated drilling time tp and having its slope E being expressed as $E = A.60^{-n}.V_c^{n}$ .

4. A method according to claim 3, wherein the constants A and n are determined plotting the slope E of the previous straight line $\dfrac{Fz_{max}}{Fz_{threshold}} = E.tp$ as a function of Vc on a logarithmic scale, i.e. ln $E = n.$ln $V_c$+ln($A$.60$^{-n}$).

5. A method according to claim 4, wherein the constants B and $\alpha$ are determined plotting the experimental values of

the ZATM$_{max}$ as a function of the product $\dfrac{Fz_{max}}{Fz_{threshold}}.tp$ , said experimental values being expressed as

$$ZATM_{max} = B.\left(\frac{Fz_{max}}{Fz_{threshold}}.tp\right)^{\alpha} .$$

6. A method according to claims 4 and 5, wherein a severity criterion is determined based on the thickness of the ZATM$_{max}$ as a function of geometric parameters (Lp, D) and of cutting parameters (Vc, f) being expressed as :

   a.

$$ZATM_{max} = B.\left(A'.V_c^{n-2}.L_p^{2}.D^2.f^{-2}\right)^{\alpha}$$

   b. with $A'=A.(10^{-6}.60^{2-n}.\pi^2)$, and constants A, $\alpha$, B and n being intrinsic to the tool/material assembly.

7. A method according to claims 1, and 4 to 5, wherein four constants A, $\alpha$, B and n are determined, being intrinsic to the tool/material assembly under consideration by the four step procedure.

8. A method according to claim 1, wherein a severity criterion is determined from the torque, involving expressing the experimental values of the ZATM$_{max}$ as a function of the maximum energy Ec$_{max}$ dissipated during the cutting operation deduced from the max torque C$_{max}$, from Vc, from D and from the calculated or measured drilling time tp, being expressed as:

   a.

$$ZATM_{max} = F.\left(\frac{10^3.C_{max}.V_c}{30.D}.tp\right)^{\lambda} - G$$

   b. with $Ec_{max} = \dfrac{10^3.C_{max}.V_c}{30.D}.tp$ , and constants $\lambda$, F

   and G being intrinsic to the tool/material assembly under consideration.

9. A method according to claim 1, wherein the areas under the Fz(t) and C(t) curves are calculated, when signals Fz and C of any anomaly do not show any threshold value and/or maximum value and when the C$_{max}$/C$_{threshold}$ and/or Fz$_{max}$/Fz$_{threshold}$ ratios are identical for two identical typical bores showing different anomaly severities.

10. A method according to claim 9, wherein the Area$_{Fzmax}$/Area$_{Fzthreshold}$ and/or Area$_{Cmax}$/Area$_{Cthreshold}$ area ratios are calculated for quantifying the anomaly severity.

11. A method according to claim 2, wherein a ICB+BMS type anomaly is detected, associated to the wear in Vb of the drill bit in the case of a drilling operation with lubrication, wherein the parameter p is determined plotting the values for Vb/Vbcrit. as a function of the values of Nb/Nbcrit., and approximating them according to a power law of the

   type: $\dfrac{Vb}{Vb_{crit.}} = \left(\dfrac{Nb}{Nb_{crit.}}\right)^{p} .$

12. A method according to claim 11, wherein for each of the cutting conditions under study, the master curve Vb*/Vb$_{crit.}$

is plotted as a function of Nb*/Nb crit.

13. A method according to claim 2, wherein the parameter q is determined plotting values for $Fz_{moy}(Nb)/Fz_{moy}(Nb=1)$ as a function of Nb for the different cutting conditions under study, and approximating them using a power law of the following type: $\dfrac{Fz_{moy}(Nb)}{Fz_{moy}(Nb=1)} = Nb^{q}$ .

14. A method according to claims 2, 11 and 12, wherein for a given tool/material assembly, $Fz_{moy}(Nb)/Fz_{moy}(Nb=1)$ is expressed as a function of the standard wear $Vb/Vb_{crit.}$ using the following relationship:

$$\frac{Fz_{moy}(Nb)}{Fz_{moy}(Nb=1)} = Nb_{crit.}{}^{q} \cdot \left(\frac{Vb}{Vb_{crit.}}\right)^{q/p} \ .$$

15. A method according to claims 11 and 14, wherein, for each cutting condition, on an equation

$$\frac{Fz_{moy}(Nb)}{Fz_{moy}(Nb=1)} = Nb_{crit.}{}^{q} \cdot \left(\frac{Vb}{Vb_{crit.}}\right)^{q/p} \ , \quad \text{the Vb*/Vb}_{crit.} \text{ values}$$

corresponding to the occurrence of the anomaly under consideration of the ICB+BMS type are plotted and $Fz^{*}_{moy}(Nb^{*})/Fz_{moy}(Nb=1)$ thereof is determined, being the detection criterion of the ICB+BMS type anomaly, independent from the cutting conditions and intrinsic to the tool/material assembly under consideration and for which $Fz_{moy}(Nb)/Fz_{moy}(Nb=1)>Fz^{*}_{moy}(Nb^{*})/F_{zmoy}(Nb=1)$ indicates the presence of the anomaly under consideration.

16. A method according to claim 2, wherein the area analysis is used for defining a detection criterion of a typical anomaly, as a result of a rake wear of the drill bit, where the surface of the anomaly under consideration is reported to that corresponding to the absence of any anomaly definid by the first bore.

**Patentansprüche**

1. Verfahren zum Erfassen und gegebenenfalls Quantisieren von Bohrungsanomalien in einem Metallstück (4), wie etwa Verkleben vereinzelter Späne, CCI, abgeschertes Materialband, BMC, oder thermomechanisch beeinträchtigter Bereich, ZATM, wobei die Bohrung mit einem Bohrer (10) ausgeführt wird, **dadurch gekennzeichnet, dass** es darin besteht, einerseits ausgehend von Signalen, die von Sensoren bereitgestellt werden, welche die Beanspruchungen des Bohrers auf das Werkstück darstellen, eine Wertemenge der beiden folgenden Parameter zeitabhängig zu bestimmen, nämlich die Axialbeanspruchung des Eindringens des Bohrers (10) in das Metallstück (4) Fz(t) und das Drehmoment C(t), die während mindestens eines Teils des Bohrvorgangs zwischen dem Zeitpunkt t0 des Eintritts der Spitze (11) des Bohrers und dem Zeitpunkt t4 des Endes des Auskratzens erzeugt werden, dann daraus die Werte $Fz_{palier}$ und $C_{palier}$ zu entnehmen, die einer Stufe entsprechen und das Fehlen von Anomalien darstellen, wobei die Werte $Fz_{max}$ und $C_{max}$ den Höchstwerten entsprechen, die das Vorhandensein einer Anomalie darstellen, und daraus anschließend die Verhältnisse $Fz_{max}/Fz_{palier}$ und/oder $C_{max}/Cp_{alier}$ und/oder gegebenenfalls das Flächenverhältnis $Aire_{Fzmax}/Aire_{Fzpalier}$ und/oder $Aire_{Cmax}/Aire_{Cpalier}$ zu bestimmen, welche die Flächen unter den Kurven Fz(t) oder C(t) sind, deren untere Grenze $Fz_{palier}$ oder $C_{palier}$ und deren obere Grenze $Fz_{max}$ oder $C_{max}$ sind, bezogen auf die Flächen unter den Kurven Fz(t) oder C(t), deren obere Grenze $Fz_{palier}$ oder $C_{palier}$ ist, um Aufschluss über die Art der Anomalien und gegebenenfalls über ihren Schweregrad zu geben, wobei eine Anomalie der Art CCI ausgehend von dem Änderungsbereich des Verhältnisses $[C_{max}/C_{palier}]_{CCI} > 1$ und einem Verhältnis $[Fz_{max}/Fz_{palier}]_{CCI} = 1$ bestimmt wird, eine Anomalie der kombinierten Art CCI und BMC ausgehend von dem Änderungsbereich des Verhältnisses $[C_{max}/C_{palier}]_{CCI+BMC} > [C_{max}/C_{palier}]_{CCI} > 1$ und einem Verhältnis $[Fz_{max}/Fz_{palier}]_{CCI+BMC} = 1$ bestimmt wird, und eine Anomalie der kombinierten Art CCI, BMC und ZATM ausgehend von dem Änderungsbereich des Verhältnisses $[C_{max}/C_{palier}]_{CCI+BMC+ZATM} > [C_{max}/C_{palier}]_{CCI+BMC} > 1$ und einem Verhältnis $[Fz_{max}/Fz_{palier}]_{CCI+BMC+ZATM} > 1$ bestimmt wird.

2. Verfahren nach Anspruch 1, ebenfalls daraus bestehend, die Werte $Fz_{moy}(Nb)$ und $C_{moy}(Nb)$ je nach der Anzahl der gebohrten Löcher und entsprechend den durchschnittlichen Werten der Signale am Eingang der Schnittkanten in das Material zu entnehmen, und anschließend die Verhältnisse $Fz_{moy}(Nb)/Fz_{moy}(Nb=1)$ und/oder $C_{moy}(Nb)/C_{moy}(Nb=1)$ und/oder gegebenenfalls das Flächenverhältnis $Aire_{Fzmoy}(Nb)$ $/Aire_{Fzmoy}(Nb=1)$ und/oder $Aire_{Cmoy}(Nb)$ $/Aire_{Cmoy}(Nb=1)$ zu bestimmen, und auch eine Wertemenge zu entnehmen, die mit dem Freiflächenverschleiß Vb des Bohrers zusammenhängen, so dass $Nb_{crit.}$ der kritischen Anzahl von gebohrten Löchern entspricht, wonach Vb = 0,3 mm (Ausmusterung des Bohrers), Vb* und Nb* dem ersten Auftreten der betreffenden Anomalie entsprechen, um Aufschluss über das Auftreten einer mit dem Verschleiß zusammenhängenden Anomalie zu geben.

3. Verfahren nach Anspruch 1, wobei das Verhältnis $Fz_{max}/Fz_{palier}$ in Abhängigkeit von der gemessenen oder berechneten Bohrzeit tp aufgetragen wird, und dessen Steigung E sich wie $E = A.60^{-n}.V_c^n$ gestaltet.

4. Verfahren nach Anspruch 3, wobei die Konstanten A und n bestimmt werden, indem die Steigung E der vorhergehenden Geraden $\dfrac{Fz_{max}}{Fz_{palier}} = E.tp$ in Abhängigkeit von Vc auf logarithmischem Maßstab aufgetragen wird, nämlich

$lnE = n.lnV_c + ln(A.60^{-n})$.

5. Verfahren nach Anspruch 4, wobei die Konstanten B und $\alpha$ bestimmt werden, indem die Prüfwerte von $ZATM_{max}$ in Abhängigkeit von dem Produkt $\dfrac{Fz_{max}}{Fz_{palier}}.tp$ aufgetragen werden, die sich wie $ZATM_{max} = B.\left(\dfrac{Fz_{max}}{Fz_{palier}}.tp\right)^{\alpha}$ gestalten.

6. Verfahren nach Anspruch 4 und 5, wobei ein Schweregradkriterium bestimmt wird, das auf der Dicke von $ZATM_{max}$ in Abhängigkeit von den geometrischen Parametern (Lp, D) und den Schnittparametern (Vc, f) basiert und sich wie folgt gestaltet:

   a)

$$ZATM_{max} = B.\left(A'.V_c^{n-2}.L_p^{2}.D^{2}.f^{-2}\right)^{\alpha}$$

   b) mit $A' = A.(10^{-6}.60^{2-n}.\pi^2)$ und wobei die Konstanten A, $\alpha$, B und n spezifisch für die Werkzeug/Material-Einheit sind.

7. Verfahren nach den Ansprüchen 1 und 4 bis 5, wobei die vier Konstanten A, $\alpha$, B und n, die für die betreffende Werkzeug/Material-Einheit spezifisch sind, nach der Vorgehensweise in vier Schritten bestimmt werden.

8. Verfahren nach Anspruch 1, wobei ein Schweregradkriterium ausgehend von dem Drehmoment bestimmt wird, das darin besteht, die Prüfwerte von $ZATM_{max}$ in Abhängigkeit von der maximalen Energie $EC_{max}$ auszudrücken, die beim Schneiden abgeführt wird, abgezogen von dem maximalen Drehmoment $C_{max}$, von Vc, von D und von der berechneten oder gemessenen Bohrzeit, die sich wie folgt gestalten:

   a)

$$ZATM_{max} = F.\left(\dfrac{10^3.C_{max}.V_c}{30.D}.tp\right)^{\lambda} - G$$

   b) mit $Ec_{max} = \dfrac{10^3.C_{max}.V_c}{30.D}.tp$ , und wobei die Konstanten $\lambda$, F und G für die betreffende Werkzeug/Material-Einheit spezifisch sind.

**9.** Verfahren nach Anspruch 1, wobei die Flächen unter den Kurven Fz(t) und C(t) berechnet werden, wenn die Signale Fz und C einer beliebigen Anomalie keinen Stufenwert und/oder Höchstwert aufweisen, und wenn die Verhältnisse $C_{max}/C_{palier}$ und/oder $Fz_{max}/Fz_{palier}$ für zwei gleiche typische Löcher gleich sind, die verschiedene Anomalieschweregrade aufweisen.

**10.** Verfahren nach Anspruch 9, wobei die Flächenverhältnisse $Aire_{Fzmax}/Aire_{Fzpalier}$ und/oder $Aire_{Cmax}/Aire_{Cpalier}$ berechnet werden, um den Schweregrad der Anomalie zu quantisieren.

**11.** Verfahren nach Anspruch 2, wobei die Anomalie von der Art CCI+BMC erfasst wird, die mit dem Verschleiß an Vb des Bohrers bei einer Bohrung mit Schmierung zusammenhängt, wobei der Parameter p bestimmt wird, indem die Werte $Vb/Vb_{crit.}$ in Abhängigkeit der Werte von $Nb/Nb_{crit.}$ aufgetragen und gemäß einer Potenzregel folgender Art

genähert werden: $\dfrac{Vb}{Vb_{crit.}} = \left(\dfrac{Nb}{Nb_{crit.}}\right)^{p}$ .

**12.** Verfahren nach Anspruch 11, wobei für jede der untersuchten Schnittbedingungen die Hauptkurve $Vb^{*}/Vb_{crit.}$ in Abhängigkeit von $Nb^{*}/Nb_{crit.}$ aufgetragen wird.

**13.** Verfahren nach Anspruch 2, wobei der Parameter q bestimmt wird, indem die Werte von $Fz_{moy}(Nb)/Fz_{moy}(Nb=1)$ in Abhängigkeit von Nb für die verschiedenen untersuchten Schnittbedingungen bestimmt werden, und indem sie durch eine Potenzregel folgender Art genähert werden:

$$\frac{Fz_{moy}(Nb)}{Fz_{moy}(Nb=1)} = Nb^{q}$$
.

**14.** Verfahren nach den Ansprüchen 2, 11 und 12, wobei für eine gegebene Werkzeug/Material-Einheit $Fz_{moy}(Nb)/Fz_{moy}(Nb=1)$ in Abhängigkeit von dem genormten Verschleiß $Vb/Vb_{crit.}$ durch folgende Beziehung ausgedrückt

wird: $\dfrac{Fz_{moy}(Nb)}{Fz_{moy}(Nb=1)} = Nb_{crit.}^{q}\left(\dfrac{Vb}{Vb_{crit.}}\right)^{q/p}$ .

**15.** Verfahren nach Anspruch 11 und 14, wobei auf der

Gleichungskurve $\dfrac{Fz_{moy}(Nb)}{Fz_{moy}(Nb=1)} = Nb_{crit.}^{q}\left(\dfrac{Vb}{Vb_{crit.}}\right)^{q/p}$ für jede Schnittbedingung die Werte von $Vb^{*}/Vb_{crit.}$ aufgetragen werden, die dem Auftreten der betreffenden Anomalie von der Art CCI+BMC entsprechen, und $Fz^{*}_{moy}(Nb^{*})/Fz_{moy}(Nb=1)$ bestimmt wird, welches das Kriterium der Erfassung der Anomalie von der Art CCI+BMC bildet, das unabhängig von den Schnittbedingungen und für die betreffende Werkzeug/Material-Einheit spezifisch ist, und für das $Fz_{moy}(Nb)/Fz_{moy}(Nb=1) > Fz^{*}_{moy}(Nb^{*})/Fz_{moy}(Nb=1)$ das Vorhandensein der betreffenden Anomalie angibt.

**16.** Verfahren nach Anspruch 2, wobei die Analyse der Flächen verwendet wird, um ein Kriterium der Erfassung einer typischen Anomalie in Folge eines Freiflächenverschleißes des Bohrers zu definieren, wobei die Fläche der betreffenden Anomalie auf diejenige bezogen wird, die dem Fehlen der Anomalie entspricht, das durch das erste Loch definiert wird.

Figure 1

Figure 2

# Figure 3

Table de mesure
tridimensionnelle d'efforts

**C**

$F_X$

$F_Z$

$F_Y$

51

Amplificateur des signaux

Channel

50

Bornier

53

PC avec carte
d'acquisition

54

EP 1 882 547 B1

# Figure 4

$$t_t = t_p + t_d = t_4 - t_0$$
$$t_p = t_2 - t_0$$
$$t_d = t_4 - t_2$$

$$Lt = Lp + Ld$$

EP 1 882 547 B1

Figure 5

Figure 6

Figure 7a

Figure 7b

Figure 7c

(1)

Figure 8b

Figure 8a

Figure 8c

Figure 8d

Figure 9

Figure 10

# Figure 11a

# Figure 11b

(1)

# Figure 11c

DP1

MC1

$HV_{0,1}$

µm

# Figure 11e

MC2

DP2

CI2

# Figure 11f

MC3

DP3

CI3

Sortie de l' outil

# Figure 11d

EP 1 882 547 B1

# Figure 12

# Figure 13

EP 1 882 547 B1

## Figure 14b

## Figure 14a

ENTRÉE

Cl4

DP4

MC4

40µm

## Figure 14c

(1)

MC

ZR5

Cl5

40µm

1mm

## Figure 14d

SORTIE

Cl6

ZATM6

100µm

Figure 14e

Figure 14f

Figure 14g

Figure 15

Figure 16

# Figure 17

$Fz_{max}/Fz_{palier}$

$$\frac{Fz_{max}}{Fz_{palier}} = E.tp$$

◆ Vc1   ▲ Vc2   ■ Vc3

Vc1<Vc2<Vc3

temps (s)

EP 1 882 547 B1

# Figure 18

ln Vc

$$\ln E = n.\ln V_c + \ln\left(A.60^{-n}\right)$$

ln E

Vc1     Vc2     Vc3

Vc1<Vc2<Vc3

EP 1 882 547 B1

# Figure 19

$$ZATM_{max} = B \cdot \left( \frac{Fz_{max}}{Fz_{palier}} \cdot tp \right)^{n}$$

Axes: $ZATM_{max}$ (µm) versus $Fz_{max}/Fz_{palier} \cdot tp$ (s)

Figure 20

# Figure 21

# Figure 22

$$\frac{Vb}{Vb_{crit.}} = \left(\frac{Nb}{Nb_{crit.}}\right)^{p}$$

EP 1 882 547 B1

Figure 23

# Figure 24

EP 1 882 547 B1

# Figure 25

$Fz_{moy}(Nb)/Fz_{moy}(Nb=1)$

Legend: COM, Hors COM

$$\frac{Fz_{moy}(Nb)}{Fz_{moy}(Nb=1)} = Nb^q$$

Nb

EP 1 882 547 B1

# Figure 26

Fz$_{moy}$(Nb)/Fz$_{moy}$(Nb=1)

Legend:
— COM
···· hors COM

$$\frac{Fz_{moy}(Nb)}{Fz_{moy}(Nb=1)} = Nb_{crit.}{}^{q} \cdot \left(\frac{Vb}{Vb_{crit.}}\right)^{q/p}$$

Fz$_{moy}$*(Nb)/Fz$_{moy}$(Nb=1)

Vb/Vb$_{crit.}$

Vb*/Vb$_{crit. Hors COM}$

Vb*/Vb$_{crit. COM}$

# Figure 27

EP 1 882 547 B1

# Figure 28

EP 1 882 547 B1

# Figure 29

EP 1 882 547 B1

# Figure 30

EP 1 882 547 B1

# Figure 31

# Figure 32

$$\ln E = n.\ln V_c + \ln\left(A.60^{-n}\right)$$

y = 2,65x - 12,31

ln Vc (axis): 3,9  4  4,1  4,2  4,3  4,4  4,5  4,6  4,7

ln E (axis): 0  -0,2  -0,4  -0,6  -0,8  -1  -1,2  -1,4  -1,6  -1,8

Vc=55m/min

Vc=75m/min

Vc=100m/min

# Figure 33

$$y = 320 \, x^{0,46}$$

$$ZATM_{max} = B.\left( \frac{Fz_{max}}{Fz_{palier}} tp \right)^{\alpha}$$

ZATM$_{max}$ (µm)

Fz$_{max}$/Fz$_{palier}$ . tp (s)

Figure 34

# Figure 35

EP 1 882 547 B1

# Figure 36

Vb/Vbcrit

COM - avec p=0,675

hors COM - avec p=0,552

$$\frac{Vb}{Vb_{crit.}} = \left(\frac{Nb}{Nb_{crit.}}\right)^{p}$$

Nb/Nbcrit

EP 1 882 547 B1

# Figure 37

Figure 38

# Figure 39

Fz$_{moy}$(Nb)/Fz$_{moy}$(Nb=1)

Legend:
- COM - avec q=0,046
- Hors COM - avec q=0,139

$$\frac{Fz_{moy}(Nb)}{Fz_{moy}(Nb=1)} = Nb^q$$

EP 1 882 547 B1

# Figure 40

Fz$_{moy}$(Nb)/Fz$_{moy}$(Nb=1)

Legend:
—— COM      avec p=0,675 et q=0,046
····· hors COM      avec p=0,552 et q=0,139

$$\frac{Fz_{moy}(Nb)}{Fz_{moy}(Nb=1)} = Nb_{crit.}{}^{q} \cdot \left(\frac{Vb}{Vb_{crit.}}\right)^{q/p}$$

Fz$_{moy}$*(Nb)/Fz$_{moy}$(Nb=1)

Vb*/Vb$_{crit.}$ Hors COM

Vb*/Vb$_{crit.}$ COM

Vb/Vb$_{crit.}$

EP 1 882 547 B1

# Figure 41

En gris : signaux non filtrés
En noir : Signaux filtrés - filtre passe bas

# Figure 42

Figure 43

**EP 1 882 547 B1**

**Documents brevets cités dans la description**

- FR 2625123

- EP 1342534 A